# EUROPEAN PATENT APPLICATION

(11) **EP 4 803 984 A2**
(43) Date of publication of application: **09.09.2026**
(21) Application number: 26192785.9
(22) Date of filing: 06.09.2023
(51) Int. Cl.: G06F 3/0346

(54) **TANGIBLE/VIRTUAL DESIGN SYSTEMS AND METHODS FOR AMUSEMENT PARK ATTRACTION DESIGN**

(30) Priority: 06.09.2022 US 202263403981 P; 13.04.2023 US 202363495954 P; 05.09.2023 US 202318242444
(62) Document number(s) of the earlier application(s) in accordance with Art. 76 EPC: 23783135.9 / 4 583 996
(71) Applicant: Universal City Studios LLC, Universal City, CA 91608 (US)
(72) Inventor: KRAUTHAMER, Akiva Meir, Orlando, 32819 (US); GARNIER, Timothy Fitzgerald, Orlando, 32819 (US)
(74) Representative: Keltie LLP

(57) **Abstract**

An amusement park attraction design system may include a display surface; a first object token and a second object token located on the display surface; and a controller. The controller may be configured to: receive location data and configuration data associated with the first object token and the second object token; identify the first object token and the second object token based on the configuration data; receive image content based on the identified first object token, wherein the image content corresponds to a feature of an amusement park attraction; generate position data associated with the image content based on the location data; and generate an indication of the image content to be projected on the display surface based on the position data.

## Description

### CROSS-REFERENCE TO RELATED APPLICATIONS

This application claims priority to U.S. Provisional Application No. 63/403,981, entitled "TANGIBLE/VIRTUAL DESIGN SYSTEMS AND METHODS FOR AMUSEMENT PARK ATTRACTION DESIGN," filed September 6, 2022, and U.S. Provisional Application No. 63/495,954, entitled "TANGIBLE/VIRTUAL DESIGN SYSTEMS AND METHODS FOR AMUSEMENT PARK ATTRACTION DESIGN," filed April 13, 2023, both of which are hereby incorporated by reference in their entireties for all purposes.

### BACKGROUND

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Throughout amusement parks and other entertainment venues, special effects can be used to help immerse guests in the experience of a ride or attraction. Immersive environments may include three-dimensional (3D) props and set pieces, robotic or mechanical elements, and/or display surfaces that present media. In addition, the immersive environment may include audio effects, smoke effects, and/or motion effects. Thus, immersive environments may include a combination of dynamic and static elements. However, design, implementation, and operation of special effects may be complex. For example, it may be difficult to operate certain elements of the special effects in a consistent and desirable manner to create the immersive environment. With the increasing sophistication and complexity of modern ride attractions and experiences, and the corresponding increase in expectations among theme or amusement park guests, present techniques for designing attractions may be time-consuming and costly. As such, techniques to efficiently design and ensure consistent operation may be desirable.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, an amusement park attraction design system may include an object token having a first tracker coupled to a first projection surface, a visualization tool having a second tracker coupled to a second projection surface, and an image sensor configured to detect the first tracker and the second tracker, and generate location data based on the first tracker and the second tracker. The amusement park attraction design system may also include a controller communicatively coupled to the image sensor and a projector. The controller may receive the location data provided by the image sensor, determine the object token based on the first tracker, and determine the visualization tool based on the second tracker. The controller may also receive image content based on an interaction between the object token and the visualization tool and send an indication of the image content to be projected onto the first projection surface based on the location data. The projector may receive the indication of the image content from the controller and project the image content onto the first projection surface.

In another embodiment, a method may include receiving, via processing circuitry, location data and configuration data associated with an object token and a visualization tool, identifying the object token and the visualization tool based on the configuration data, and receiving an indication of an interaction between the visualization tool and the object token. The method may then receive, via the processing circuitry, image content based on the interaction and the configuration data, and cause the image content to be projected based on the position data.

In another embodiment, an amusement park attraction design system may include a display surface configured to receive one or more object tokens, a timeline tool coupled to the display surface and a movement sensor, and an image sensor configured to generate image data indicative of the display surface and the object tokens. The system may also include a controller communicatively coupled to the image sensor and the movement sensor. The controller may receive image content based on the object token, receive an indication indicative of movement of the timeline tool from the movement sensor, adjust the image content based on the indication to generate adjusted image content, and cause the adjusted image content to be projected onto the display surface.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of a tangible/virtual design system including a display surface, in accordance with an embodiment of the present disclosure;
FIG. 2 is perspective diagram of an example embodiment of the tangible/virtual design system of FIG. 1 for detecting object tokens on a display surface;
FIG. 3 is a perspective diagram of another example embodiment of the tangible/virtual design system of FIG. 1 for designing an amusement park attraction of experience;
FIG. 4 is a flowchart of a process for generating object visualizations using the tangible/virtual environment system of FIG. 1, in accordance with an embodiment of the present disclosure;
FIG. 5 is a perspective diagram of another example embodiment of the tangible/virtual design system of FIG. 1 for detecting object tokens on a display surface;
FIG. 6A is a perspective diagram of an example embodiment of an object token of the tangible/virtual design system of FIG. 1;
FIG. 6B is a perspective diagram of another example embodiment of the object token of the tangible/virtual design system of FIG. 1;
FIG. 7 is a flowchart of a process for generating object visualizations using the tangible/virtual environment system of FIG. 1, in accordance with an embodiment of the present disclosure;
FIG. 8 is a flowchart of a process for adjusting object token attributes using the tangible/virtual environment system of FIG. 1, in accordance with an embodiment of the present disclosure;
FIG. 9 is a flowchart of a process for designing an amusement park illusion using the tangible/virtual environment system of FIG. 1, in accordance with an embodiment of the present disclosure;
FIG. 10 is a flowchart of a process for adjusting position of object tokens using the tangible/virtual environment system of FIG. 1, in accordance with an embodiment of the present disclosure;
FIG. 11 is a flowchart of a process for troubleshooting amusement park attraction designs using the tangible/virtual environment system of FIG. 1, in accordance with an embodiment of the present disclosure;
FIG. 12A is a schematic diagram of an example embodiment of a visualization tool of the tangible/virtual design system of FIG. 1 in the form of a paintbrush tool;
FIG. 12B is a schematic diagram of an example embodiment of the visualization tool of the tangible/virtual design system of FIG. 1 in the form of a magnifying tool;
FIG. 12C is a schematic diagram of an example embodiment of the visualization tool of the tangible/virtual design system of FIG. 1 in the form of a scissor tool;
FIG. 12D is a schematic diagram of an example embodiment of the visualization tool of the tangible/virtual design system of FIG. 1 in the form of a ruler tool;
FIG. 12E is a block diagram of an example embodiment of the visualization tool of the tangible/virtual design system of FIG. 1, in accordance with an embodiment of the present disclosure;
FIG. 13 is a perspective diagram of an example embodiment of the visualization tool of tangible/virtual design system of FIG. 1 in the form of one or more filter tiles, in accordance with an embodiment of the present disclosure;
FIG. 14A is a perspective diagram of an example embodiment of the object visualization as a projection map generated by the tangible/virtual design system of FIG. 1 based on the visualization tool of FIG. 13;
FIG. 14B is a perspective diagram of an example embodiment of the object visualization as projection map generated by the tangible/virtual design system of FIG. 1 based on the visualization tool of FIG. 13; and
FIG. 14C is a perspective diagram of an example embodiment of the object visualization as a projection map generated by the tangible/virtual design system of FIG. 1 based on the visualization tool of FIG. 13.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Theme parks and other such entertainment venues are becoming increasingly popular. Further, immersive experiences within such entertainment venues are in high demand. In order to provide new and exciting experiences, attractions, such as ride experiences and scenes (e.g., visual shows including live action, animated figures, computer-generated imagery, and so on) have become increasingly complex, involving integration of lighting, sound, movement, interactive elements, visual media, and so on. Conventional attraction design software may provide low cost updates and changes to attractions, but may require specialized knowledge and training to utilize the design software. Alternatively, small-scale design models may not accurately represent all aspects of complex attractions and, as such, may not provide efficient troubleshooting.

Instead, the tangible/virtual design system of the present disclosure may display media content via projection mapping to more accurately visually represent textures, colors, and surfaces of an attraction and may also allow for modifications and updates to troubleshoot different designs. Additionally, the tangible/virtual design system of the present disclosure may utilize objects that correspond to virtual models (e.g., ride vehicle, building, structure, animated figure, guest, path, and so forth). As such, the tangible/virtual design system of the present disclosure may display the virtual models on display surfaces, electronic displays, and so forth. The objects may be fitted with trackers that enable tracking cameras to discern movements, positions, and orientations of the corresponding virtual models. Further, the tangible/virtual design system may include markers and/or tools that interact with the objects to modify or update textures, colors, surfaces, and other features of the corresponding model. As such, the tangible/virtual system provides an interactive experience for attraction design that includes customizable features and combines tangible and virtual elements, but without the challenges and/or costs associated with conventional techniques.

In view of the foregoing, the present disclosure relates generally to combination tangible/virtual design systems for an amusement park attraction and/or experience. Notably, the tangible/virtual design system includes any number of object tokens, such as small-scale models (e.g., ride vehicle, building, structure, scenery, animated figure, guest, path, and so forth) or other tangible objects, which may represent a corresponding virtual model. For example, the object token may include a machine-readable indicia (e.g., barcode, Quick Response (QR) code, a pattern of dots, identification numbers, radio frequency (RF) tag, and so forth) that may enable cameras or other scanning devices to detect object tokens and capture image data including a QR code. The tangible/virtual design system may identify corresponding virtual models based on the QR code. The tangible/virtual design system may then generate a model visualization based on the virtual model and may display the visualization via a projector, an electronic display, and so forth. For example, the object token may correspond to a virtual model of a building and the tangible/virtual design system may project an image of the building on a display surface.

In certain embodiments, the object tokens may include trackers, such as retroreflective markers, the machine-readable indicia, and so forth, that enable cameras to discern movements, positions, and orientations of the object tokens and/or projection surfaces in real-time via optical performance capture or optical motion capture. Thus, the tangible/virtual design system may dynamically generate and display projected images onto the object tokens and/or the display surface that emulate corresponding structures, figures, characters, movement, and/or reaction to other effects (e.g., environmental effects, visual effects, pyrotechnic effects, fluid flow effects) associated with the amusement park attraction or experience. In some embodiments, the object tokens may take the shape of the corresponding virtual model. Additionally or alternatively, the object tokens may include a label identifying the corresponding virtual model. Accordingly, the tangible/virtual design system may allow for efficient design and troubleshooting for amusement park attractions or experiences by detecting object tokens and projecting images in corresponding positions and/or orientations to accurately represent the amusement park attractions or experiences.

Additionally, imagery may be projected onto the display surface and/or the object token to create an illusion of structure, texture, material, color, or the like. For example, to enhance the authenticity and visual representation of an amusement park attraction or experience, any number of projection surfaces may display textures (e.g., smooth, rough, bumpy, pointy, wavy, and the like) and/or materials (e.g., brick, stone, wood, metal, glass, and so forth) for a virtual model of an object. In certain embodiments, the tangible/virtual design system includes any number of visualization tools that may represent corresponding attributes (e.g., structure, texture, material, color, length, width, point of view, angle, or the like). The visualization tools include a machine-readable indicia that may enable cameras or other scanning devices to detect visualization tools and capture image data. The tangible/virtual design system may identify corresponding attributes based on the captured image data and may generate and/or update projected images based on the identified attributes. For example, the tangible/virtual design system may detect and identify a visualization tool that corresponds to a brick material. As such, the tangible/virtual design system may operate and control projectors to project imagery corresponding to the brick material on the display surface, the object token, and/or a designated area corresponding to an object token.

Additionally or alternatively, the tangible/virtual design system may detect an interaction between object tokens and visualization tools. For example, cameras may determine a proximity between a visualization tool and an object token and/or may determine a nearest object token to a visualization tool. As such, a visualization of the object token may be generated and/or updated based on a nearby visualization tool. In certain instances, the projectors may project imagery based on the visualization tool onto the display surface and/or the object tokens.

By way of example, visualization tools may interact with object tokens to alter, update, or determine one or more attributes of the virtual models corresponding to the object tokens. For example, a paintbrush tool may alter a color of the virtual model or apply a color to the virtual model based interactions between the visualization tool and the object token. The tangible/virtual design system may detect interactions between a paintbrush tool and the object token, and may control projectors to update the visualizations of the object tokens (e.g., model virtualization). For example, the paintbrush tool may correspond to color and interactions between the paintbrush tool and the object token may cause the tangible/virtual design system to operate and control projects to project imagery corresponding to the color on the display surface, the object token, and/or the designated area corresponding to the object token. In another example, a magnifying tool may enable visualization at different points-of-view (e.g., bird's eye view, close-up or zoomed-in view, zoomed-out view, perspective view) of the virtual model by interactions with the object token. The tangible/virtual design system may detect interactions between the magnifying tool and the object token and may control projectors to update the visualizations of the object token. Additionally or alternatively, the tangible/virtual design system may determine a physical property (e.g., length, width, surface area, angle, shape, mass, density, specific heat, odor, color) of the virtual model that corresponds to the object token based on interactions between the visualization tool the object token. For example, a measurement tool may enable measurement of the virtual model, such as a height, a length, a width, a surface area, and the like. Additionally or alternatively, the measurement tool may measure brightness (e.g., light, luminance), sound volume, temperature, and the like of the virtual model and/or within a designated area corresponding to the object token tangible/virtual design system.

Still in another example, one or more filter tools may enable display of attributes associated with the virtual model corresponding to the object token. The attributes may include cost, brightness, sound volume, viewing time, user input, and the like. For example, a cost filter tile may cause the tangible/virtual design system to control projectors to project imagery corresponding to a cost associated with each portion of the virtual model. Additionally, multiple filter tools may be combined or stacked to provide visualization indicative of multiple attributes of the virtual model. For example, a first filter tool may correspond to a cost of building the virtual model and a second filter tool may correspond to an amount of time a guest may view the virtual model (e.g., when passing the object while traveling in a vehicle). By combining the filters (e.g., stacking the first filter tool on top of the second filter tool), the tangible/virtual design system may determine an amount of time each portion of the virtual model may be viewed by a guest (e.g., while on a ride, while walking within the attraction system) divided by a cost associated with each corresponding portion of the virtual model. When combining the filter tools in the opposite manner (e.g., second filter tool on top of the first filter tool), the tangible/virtual design system may determine the cost divided by the amount of time each portion of the virtual model may be viewed by the guest. As such, the visualization tools may alter, change, or measure one or more attributes of the virtual model for efficient design and troubleshooting of amusement park attractions or experiences.

In an embodiment, the tangible/virtual design system includes effect tiles that correspond to environmental effects, visual effects, pyrotechnic effects, fluid flow effects, and the like. The effect tiles may include machine-readable indicia that enables the tangible/virtual design system to determine corresponding effects and/or markers that enable cameras to determine a position and/or an orientation of the effect tiles. For example, a clock tile may correspond to a time of day and may adjust lighting effects based on a determined position of the sun. The tangible/virtual design system may determine a time of day based on an orientation and/or a position of the clock tile. The projectors may project imagery corresponding to a virtual light source based on the time of day and a determined position and angle of the sun. As another example, a weather tile may correspond to a selected weather and may adjust lighting effects, environmental effects, and so forth for any number of objects. Environmental effects may include a wind speed, precipitation, cloud cover, humidity, fog, and the like. The environmental effects may alter the visualization of one or more objects. For example, projectors project imagery of branches and leaves moving in the wind for scenery objects. In this way, the effect tiles may alter visualization of one or more objects.

In certain instances, the effect tiles may include a timeline tool to advance, reverse, stop, or pause time within the system. For example, the timeline tool may include a physical device coupled to the display surface and the physical device may be pushed, pulled, or otherwise adjusted with respect to the display surface. The display surface may also be coupled to a sensor, which may receive an indication of movement of the physical device. In certain instances, the tangible/virtual design system may receive indication of the movement and adjust a simulated time of day within the tangible/virtual design system. For example, the tangible/virtual design system may advance the simulated time of day from morning to afternoon based on the indication of the movement. In other instances, the tangible/virtual design system may receive indication of the movement and adjust a real, project time. For example, the tangible/virtual design system may receive user input indicative of starting a project or continuing a project and control a camera to capture and store imagery of the display surface with the object tokens, the projected imagery, or both over a period of time. In response to receiving the indication of the movement, the tangible/virtual design system may playback the captured imagery. In other words, the real time of the project may be reversed. Additionally or alternatively, the tangible/virtual design system may pause or stop the playback in response to receiving the indication of the movement.

In certain embodiments, the tangible/virtual design system includes a camera object that enables visualization of a point-of-view based on a position and/or orientation of the camera object. The tangible/virtual design system may generate the point-of-view visualization for display on an electronic display and/or the display surface. Additionally or alternatively, the tangible/virtual design system may detect interactions between the camera object and other object tokens, such as a ride vehicle. For example, interactions between the camera object and another object token may indicate a selection of the other object token, such as a ride vehicle, for generation of a point-of-view visualization. As such, the tangible/virtual design system generates a visualization for a rider's point-of-view as a ride vehicle travels along a track. Additionally, any number of the object tokens may include actuators, such as an electric motor, to move the object token along or across the display surface.

The tangible/virtual design system facilitates design of various attractions or experiences, such as illusions generated on lighting effects. One such illusion is conventionally referred to as Pepper's Ghost. The Pepper's Ghost illusion utilizes reflective properties of translucent or transparent materials (e.g., glass, plastic, or the like) to virtually project images into a scene for viewing by guests. For example, an angled pane of glass may be positioned in front of a stage and imagery may be projected toward the glass from outside of a line of sight of the audience and then partially reflected toward the audience by the pane of glass. Thus, the audience perceives the reflected imagery in conjunction with viewing the scene presented behind the glass and in the line of sight of the audience. Depending on lighting, this effect can give the reflected imagery a ghostly appearance because light behind the glass remains observable through the reflected imagery. Accordingly, the tangible/virtual design system may determine positions and/or orientations of object tokens that correspond to the reflective material and the projected imagery. As such, the tangible/virtual design system determines a position and/or an orientation of the reflected imagery and generates a visualization of the reflected imagery. Additionally or alternatively, the tangible/virtual design system may include an object token that corresponds to the reflected imagery. The tangible/virtual design system may determine positions and/or orientations of two of the projected imagery, the reflected imagery, and the reflective material and may identify a position and/or an orientation of the remaining object token to complete the visual effect. In some embodiments, the object tokens may include actuators and the tangible/virtual design system may transmit signals to control the actuators and move the object tokens to the identified position and/or orientation.

In certain embodiments, the tangible/virtual design system may include constraints associated with an amusement park attraction or experience. For example, constraints may include a speed constraint (e.g., a threshold speed constraint, a maximum speed constraint, a minimum speed constraint, and so on), a turn constraint, a space constraint, and the like. In another example, constraints may include a brightness constraint (e.g., a minimum brightness constraint, a maximum brightness constraint), a sound volume constraint (e.g., a minimum sound volume constraint, a maximum sound volume constraint), a temperature constraint, and the like. The tangible/virtual design system may compare the determined positions and/or orientations of the object tokens with any number of the constraints and identify any conflicts or errors with the design based on the comparison. The tangible/virtual design system may also capture image data and record configurations of different object tokens, tools, and so forth. Accordingly, the projectors may project imagery based on the recorded configurations to allow quick setup of an amusement park attraction or experience.

In certain embodiments, the object tokens, tools, and so forth may be disposed and detected on the same display surface as the projected image is displayed. Alternatively, a second staging surface may be utilized for object detection and position and/or orientation determination, and the display surface may be utilized to display the projected image. As such, cameras or other image capture devices capture image data of objects on the staging surface and projectors project imagery based on the image data on to the display surface.

In this manner, the techniques described in the present disclosure may facilitate coordinating combined tangible and virtual representations of amusement park attractions or experiences based on identified objects that correspond to virtual models, which, at least in some instances, may facilitate design and troubleshooting of amusement park attractions or experiences.

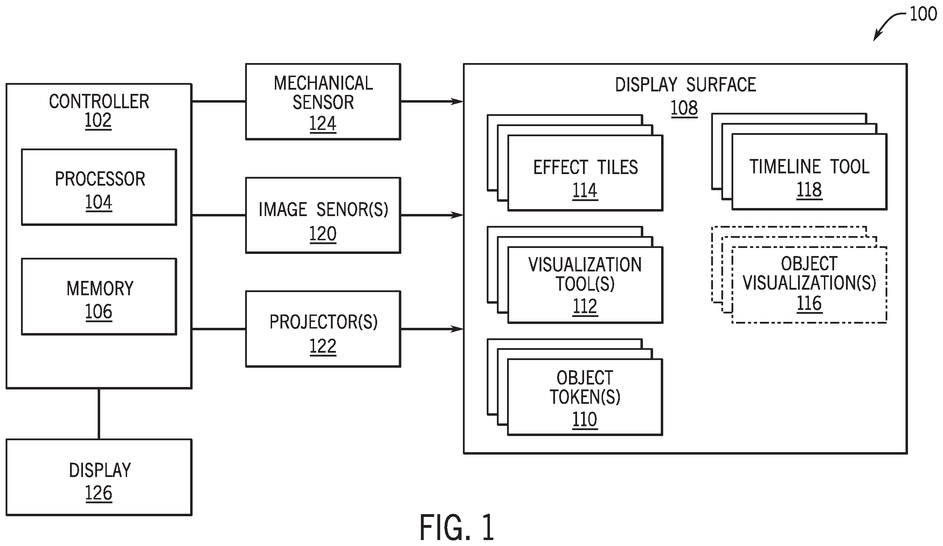

With the foregoing in mind, FIG. 1 illustrates an example of a tangible/virtual design system 100 including a controller 102, a display surface 108, and a secondary display 126. The tangible/virtual design system 100 may be used to design and troubleshoot various elements of an amusement park attraction and/or experience. The tangible/virtual design system 100 may include a control system having multiple controllers, such as an automation controller 102, each having at least one processor 104 and at least one memory 106. The automation controller 102 may control operation of any number of image sensors 120 and/or any number of projectors 122, and may process data received from the image sensors 120. The automation controller 102 may be communicatively coupled to the image sensors 120 and the projectors 122 by any suitable techniques for communicating data and control signals (e.g., an indication of image content) between the automation controller 102, the image sensors 120, and the projectors 122, such as a wireless, optical, coaxial, or other suitable connection. In some embodiments, the automation controller 102, the image sensors 120, the projectors 122, or any combination thereof, may include respective communications circuitry, such as antennas, radio transceiver circuits, radio transmitters, radio receivers, and signal processing hardware and/or software (e.g., hardware or software filters, analog-to-digital or digital-to-analog converters, multiplexers, amplifiers), or any combination thereof, and that may be configured to communicate over wired or wireless communication paths via radio frequency communication, infrared communication, Ethernet, satellite communication, broadcast radio, microwave radio, Bluetooth, Zigbee, Wi-Fi, ultrawideband communication, near field communication, and so forth.

The tangible/virtual design system 100 may also include a display surface 108 capable of displaying image content. The display surface 108 may correspond to a setting for an amusement park attraction or experience. For example, the display surface 108 may be used to design an amusement park attraction or experience using various object tokens 110, visualization tools 112, and effect tiles 114 disposed (e.g., placed) on the display surface 108 or a staging surface. Additionally or alternatively, the display surface 108 may include a first portion for placing the various objects and tools and a second portion for receiving projected image content (e.g., object visualizations 116) from the projectors 122. In certain embodiments, the display surface 108 may include any number of projection surfaces and each projection surface may depict image content associated with a setting for an amusement park attraction and/or experience. For example, an amusement park ride may appear to take place in an active volcano and the display surface 108 may depict image content associated with the active volcano (e.g., flowing lava, fire, and so forth). The image content may include ride vehicles, ride tracks, guests, pathways, buildings, scenery, structures, natural features, and any other suitable components of an amusement park attraction or experience. In certain embodiments, the display surface 108 may include machine-readable indicia (e.g., a bar code, a QR code, and the like) and/or may include trackers (e.g., trackable markers) that are positioned on the display surface 108. The machine-readable indicia and/or the trackers may be positioned on or within any suitable portion of the display surface 108 that enables the machine-readable indicia and/or the trackers to be concealed or obscured from viewing and/or interfering with projected imagery.

The trackers may be shaped as rounded cylinders or light emitting diodes, though it should be understood that the trackers may have any suitable shape, including spherical shapes, rectangular prism shapes, and so forth. The trackers enable the image sensors 120 to sense or resolve a position and/or an orientation of the display surface 108, such as via optical performance capture or optical motion capture techniques. Optical performance capture or optical motion capture refers to a technique of recording an object by capturing data from image sensors, such as image sensors 120, and trackers coupled to a surface. In some embodiments, the trackers may be active devices, which may emit an individualized signal to the image sensors 120. For example, the trackers may emit infrared light, electromagnetic energy, or any other suitable signal that is undetectable by individuals while being distinguishable by the image sensors 120. Alternatively, the trackers may be passive devices (e.g., reflectors, pigmented portions) that do not emit a signal and that enable the image sensors 120 to precisely distinguish the passive devices from other portions of the display surface 108. In certain embodiments, the trackers may be flush with or recessed within an outer surface of the display surface 108. A type and/or a configuration of the image sensors 120 may be individually selected to correspond to a type of the trackers. The image sensors 120 may be designed to receive signals from trackers (e.g., active devices) to sense the position and/or orientation of the display surface 108. Additionally or alternatively, the image sensors 120 may be designed to discern the trackers (e.g., passive devices) on the display surface 108.

The machine-readable indicia and/or the trackers may correspond to a setting for an amusement park attraction or experience, such as a particular scenery (e.g., forest, volcano, mountain, desert, and the like), a particular topography (e.g., elevations, bodies of water, and so forth), a particular section of an amusement park (e.g., a themed section, a path through the amusement park), a particular portion of an amusement park attraction or experience (e.g., a queue, a loading area, an unloading area, an effect area, and the like), or any other suitable location that may be depicted by projected image content onto the display surface 108. The image sensors 120 may generate and transmit image data that includes an image of the machine-readable indicia and/or the trackers. The processor 104 may receive the image data via the image sensors 120 by scanning a barcode, a QR code, or any other suitable machine-readable indicia. The machine-readable indicia may act as an identifier for scenery, topography, and so forth for an amusement park attraction or experience. For example, the processor 104 may process the image data to detect the machine-readable indicia and identify corresponding image content to project onto the display surface 108. The processor 104 may receive and/or retrieve the corresponding image content from the memory 106 based on the detected machine-readable indicia and may control operation of the projectors 122 to project the image content onto the display surface 108.

The tangible/virtual design system 100 may also include any number of object tokens 110 that may be disposed (e.g., placed) on the display surface 108 or any other suitable surface. The object tokens 110 may include machine-readable indicia and/or trackers that are positioned on one or more surfaces of the object tokens 110. In certain embodiments, the machine-readable indicia and/or the trackers may be positioned on or within any suitable portion of the object tokens 110 that enables the machine-readable indicia and/or the trackers to be concealed or obscured from viewing and/or interfering with projected imagery. The object tokens 110 may be captured in image data by the image sensors 120 and the automation controller 102 may detect the object tokens 110 based on the image data. The automation controller 102 may also identify the visualization tool 112 based on the image data. For example, the image sensors 120 may detect a position, an orientation, and/or a configuration of trackers on an exposed surface of the object tokens 110 and/or may detect machine-readable indicia on the exposed surface of the object tokens 110. The image sensors 120 may generate tracker data (e.g., location data, orientation data, configuration data) and/or scanning data based on the detected trackers and/or machine-readable indicia. As used herein, location data may include a current position, a current orientation, a current configuration of one or more trackers, and the like. The automation controller 102 may receive the tracker data and/or the scanning data and may identify corresponding image content based on the tracker data and/or the scanning data. In certain embodiments, the object tokens 110 may correspond to various components of an amusement park attraction or experience, such as a building, a ride vehicle, portions of a ride track, guests, a pathway for guests, natural features, barriers, and the like. For example, an object token 110 disposed on the display surface 108 may correspond to a ride vehicle. The automation controller 102 may identify the corresponding ride vehicle based on the tracker data and/or the scanning data. Additionally, an object token 110 may correspond to a camera or guest. In certain instances, an amusement park attraction designer may utilize a camera object token to visualize a point-of-view or perspective of a guest viewing an attraction or experience. For example, the image sensor 120 may detect the camera object token and may generate position data and/or orientation data based on the detection. The automation controller 102 may determine a point-of-view or perspective of the camera object taken based on the position data and/or orientation data and may instruct the projectors 122 based on the point-of-view. For example, the automation controller 102 may determine the perspective of the camera object token is pointed towards another object token on the display surface 108 based on the orientation data. As such, the automation controller 102 may instruct the projector 122 to project image content including a visual representation of the view from the camera object token. As such, the tangible/virtual design system 100 may provide a visual representation of guest's perspective when viewing amusement park attractions or experiences.

The automation controller 102 may determine a configuration of the trackers on the object token 110 and may compare the configuration with stored tracker configurations in the memory 106. The automation controller 102 may determine a correlation between the configuration on the object token 110 and one or more stored tracker configurations. As such, the automation controller 102 may identify and/or retrieve image content corresponding to the object token and may control operation of the projectors 122 to display the image content. For example, the automation controller 102 may control operation of the projectors 122 to generate one or more object visualizations 116 on the display surface 108. The object visualizations 116 may be image content that represents the identified object tokens 110. For example, the projectors 122 may project the object visualizations 116 on the display surface 108. The automation controller 102 may instruct the projectors 122 to adjust the object visualizations 116 based on image data from the image sensors 120. For example, the image data may include an updated position of the object tokens 110, an updated orientation of the object tokens 110, additional object tokens 110, a removed object tokens 110, updated attributes (e.g., color, texture, material, and so forth) for object tokens 110, and the like. In certain embodiments, the object visualization 116 may include a projection mapping of image content onto the object token 110. Additionally or alternatively, the object visualizations 116 may correspond to a virtual model displayed on the display 126. As such, the automation controller 102 may control the display 126 to generate and/or update a visual model on the display 126.

The tangible/virtual design system 100 may include any number of visualization tools 112 that may interact with object tokens 110 disposed on the display surface 108 or any other suitable surface. The visualization tools 112 may include machine-readable indicia and/or trackers that are positioned on one or more surfaces of the visualization tools 112. In certain embodiments, the machine-readable indicia and/or the trackers may be positioned on or within any suitable portion of the visualization tools 112 that enables the machine-readable indicia and/or the trackers to be concealed or obscured from viewing. The visualization tools 112 may be captured in image data by the image sensors 120 and the automation controller 102 may detect the visualization tools 112 based on the image data. The visualization tools 112 may interact with the object tokens 110 to update any number of object attributes, such as a color, a material, a texture, and the like. For example, a texture tool and/or a paintbrush tool may be disposed adjacent and/or in contact with an object token 110. The image sensors 120 may detect the paintbrush tool and/or the object token 110 and may generate image data based on the detections. The automation controller 102 may receive the image data and may determine the visualization tool 112 satisfies an interaction criteria (e.g., within a threshold distance from the object token 110, in contact with the object token 110) based on the image data.

The automation controller 102 may also identify the visualization tool 112 based on the image data. For example, the image sensors 120 may detect a position, an orientation, and/or a configuration of trackers on an exposed surface of the visualization tool 112 and/or may detect machine-readable indicia on the exposed surface of the visualization tool 112. The image sensors 120 may generate tracker data (e.g., location data, orientation data, configuration data) and/or scanning data based on the detected trackers and/or machine-readable indicia. The automation controller 102 may receive the tracker data and/or the scanning data and may identify corresponding image content based on the tracker data and/or the scanning data. For instance, the automation controller 102 may determine a configuration of the trackers on the visualization tool 112 and may compare the configuration with stored tracker configurations in the memory 106. The automation controller 102 may retrieve image content based on the comparison and may control the projectors 122 based on the image content. For example, the automation controller 102 may determine the visualization tool 112 corresponds to a paintbrush tool that adjusts a color attribute for the object token 110. The automation controller 102 may retrieve and/or update the color attribute for the object token 110 and may control the projectors 122 to display the object visualizations 116 based on the adjusted color attribute. As such, the automation controller 102 may generate and/or adjust image content (e.g., the object visualizations 116) displayed by the projectors 122 based on tracker data, scanning data, and/or the interaction criteria. In another example, a filter tool may correspond to an attribute of the object tokens 110, such as cost, brightness, sound volume, and the like. The tangible/virtual design system 100 may update a visualization of the object token 110 based on the filter tool. Additionally, multiple filter tools may be positioned (e.g., stacked) to provide combined attributes of the object token 110. The tangible/virtual design system 100 may determine the combined attributes based on a position of the each of the filter effect tiles.

The tangible/virtual design system 100 may include any number of effect tiles 114 that correspond to various visual effects that may be displayed on the display surface 108 and/or any object tokens 110 on the display surface 108. The effect tiles 114 may include machine-readable indicia and/or trackers that are positioned on one or more surfaces of the effect tiles 114. In certain embodiments, the machine-readable indicia and/or the trackers may be positioned on or within any suitable portion of the effect tiles 114 that enables the machine-readable indicia and/or the trackers to be concealed or obscured from viewing. The effect tiles 114 may be captured in image data by the image sensors 120 and the automation controller 102 may detect the effect tiles 114 based on the image data. The effect tiles 114 may interact with the display surface 108 and/or the object tokens 110 to adjust projected image content. For example, a clock effect tile may correspond to a time of day and may adjust lighting effects based on a determined position of the sun. The tangible/virtual design system 100 may determine a time of day based on an orientation and/or a position of the clock tile. For example, the image sensors 120 may detect a position, an orientation, and/or a configuration of trackers on an exposed surface of the effect tile 114 and/or may detect machine-readable indicia on the exposed surface of the effect tile 114.

The image sensors 120 may generate tracker data (e.g., location data, orientation data, configuration data) and/or scanning data based on the detected trackers and/or machine-readable indicia. The automation controller 102 may receive the tracker data and/or the scanning data and may identify corresponding image content based on the tracker data and/or the scanning data. For instance, the automation controller 102 may determine an orientation of the trackers on the clock tile and may compare the orientation with stored tracker orientations associated with the clock tile in the memory 106. The automation controller 102 may determine an associated time of day based on the comparison and may control the projectors 122 based on the time of day. For example, the automation controller 102 may determine the time of day is a sunset and may adjust lighting effects to depict shadows, lower brightness, movement of a virtual light source, and so forth. The automation controller 102 may control the projectors 122 to adjust image content based on the lighting effects. As another example, a weather tile may correspond to a selected weather and may adjust lighting effects, environmental effects, and so forth for any number of objects. Environmental effects may include a wind speed, precipitation, cloud cover, humidity, fog, and the like. The environmental effects may alter the object visualizations 116. For example, the automation controller 102 may control projectors 122 to adjust image content of branches and leaves moving in the wind for scenery objects.

In an embodiment, the tangible/virtual design system 100 may include a timeline tool 118 coupled to the display surface 108 and/or a movement sensor 124. The timeline tool 118 may include a physical device, such as a rope, a pulley, a lever, a slider, a crank with or without chains, a wire, a gear, a sliding magnet, a cammed physical device on a timeline track, and the like, and/or software tools, such as a graphical user interface (GUI) integrated with the display surface 108. For example, the timeline tool 118 may associate a starting time (e.g., time = t0) with a first end of the timeline track and an ending time (e.g., time t= t1) with a second end of the timeline track. In another example, the timeline tool 118 may associate a first point (e.g., location, spot, mark) of the timeline track with reversing time (e.g., within the tangible/virtual design system 100), a second point of the timeline track with pausing time, and a third point of the timeline track with forwarding time. Areas between the first end, the second end, and/or the third end may be associated with a speed at which the time may be adjusted. Still in another example, the timeline tool 118 may include a rope that may be pulled, pushed, or otherwise moved relative to the display surface 108. The movement sensor 124 may receive an indication of the movement and the automation controller 102 may adjust a simulated time or a project time based on the indication. In another example, the timeline tool 118 may be integrated with the GUI and the display surface 108, and the GUI may receive a user input to adjust time. For example, the automation controller 102 may advance a simulated time, reverse the simulated time, stop the simulated time, or pause the simulated time within a simulation presented by the tangible/virtual design system 100. The automation controller 102 may control the projectors 122 to adjust image content based on the simulated time. As an example, throughput of a ride may be simulated by advancing simulated time within the tangible/virtual design system 100. In another example, the automation controller 102 may reverse project time, stop the project time, or pause the project time. The automation controller 102 may control the image sensors 120 to capture imagery of the display surface 108 with the object tokens 110, the visualization tool(s) 112, the effect tiles 114, and/or the timeline tool 118 over a period of time and store the captured imagery in the memory 106. The automation controller 102 may also control the projectors 122 to store objection visualizations 116 within the memory 106. The automation controller 102 may store the imagery and/or the object visualizations with a time and/or a date (e.g., project time) of generation. In this way, the automation controller 102 may playback the stored imagery by controlling the projectors 122 and/or the display 126 in response to receiving indication of the movement.

In certain embodiments, the display 126 may be provided in the form of a computing device, such as a head-mounted display device, a personal computer, a laptop, a tablet, a mobile device (e.g., a smart phone), or any other suitable computing device. The automation controller 102 may control operation of the display 126 to display generated image content based on the various objects detected on the display surface 108. In some embodiments, the display 126 may be an electronic display, such as a light-emitting diode (LED) display, liquid crystal display, plasma display, projector, or any other suitable electronic display. Additionally or alternatively, the display 126 may be a head-mounted display that may be worn on the head of a user and the display 126 may be disposed in front of either one or both eyes of the user. The display 126 may display computer-generated imagery, live imagery, virtual reality imagery, augmented reality imagery, mixed reality imagery, and so on. In some embodiments, the display surface 108 and/or the display 126 may be viewed by any number of users. As such, multiple users may view the display 126 and/or the display surface 108 and may collaborate during design of an amusement park attraction or experience using the tangible/virtual design system 100.

The automation controller 102 may represent a unified hardware component or an assembly of separate components integrated through communicative coupling (e.g., wired or wireless communications). The automation controller 102 may be provided in the form of a computing device, such as a programmable logic controller (PLC), personal computer, a laptop, a tablet, a mobile device, a server, or any other suitable computing device. The memory 106 may include one or more tangible, non-transitory, computer-readable media that store instructions executable by the processor 104 (representing one or more processors) and/or data to be processed by the processor 104. For example, the memory 106 may include random access memory (RAM), read-only memory (ROM), rewritable non-volatile memory such as flash memory, hard drives, optical discs, and/or the like. Additionally, the processor 104 may include one or more general purpose microprocessors, one or more application specific integrated circuits (ASICs), one or more field programmable logic arrays (FPGAs), any suitable processing circuitry, or any combination thereof.

Further, the memory 106 may store image data obtained via the image sensors 120 and/or algorithms utilized by the processor 104 to help control operation of the image sensors 120 and/or the projectors 122. For example, the memory 106 may store image data of one or more users interacting with the display surface 108, the object tokens 110, the visualization tools 112, the effect tiles 114, and/or the timeline tool 118 over a period of time. In other instances, the memory 106 may store image data of the object visualizations 116. The processor 104 may control generation of the object visualizations 116 via the projectors 122. Additionally, the processor 104 may process image data to generate control signals for the projectors 122 and/or the image sensors 120, may control and/or monitor operation of the display 126, and/or may detect and determine a position, an orientation, motion attributes, and the like for any number of object tokens 110, visualization tools 112, and effect tiles 114.

In an embodiment, additional data may be accessed by, input into, and/or output by the tangible/virtual design system 100. For example, additional data may include measured and/or data derived from measurements and/or predictions. Predictions may include mathematical predictions and/or statistical predictions. The additional data may include temperature, humidity, precipitation, wind, cloud, and/or celestial body data (e.g., rise and set times, height, angle, location), and the additional data may be relative to a location (e.g., location of an object token 110, location a data collection site located near an object token 110 (e.g., closest data collection sight to object token 110)). The additional data may come from internal sources (e.g., measured, derived, and/or predicted by the tangible/virtual design system 100 and/or the user) or external sources. External sources may include one or more scientific databases, government databases, research databases, and/or other relevant databases. The additional data may be displayed by the tangible/virtual design system 100 and/or utilized by the tangible/virtual design system 100 to derive outputs that are displayed by the tangible/virtual design system 100. This may allow conditions (e.g., environmental conditions, astronomical conditions) for particular times of day and/or for particular times of the year to be displayed by the tangible/virtual design system 100. The conditions may be relative to a particular location (e.g., location of an object token 110, location of a data collection site located near an object token 110 (e.g., closest data collection sight to object token 110)). For example, the tangible/virtual design system 100 may display the brightness of light reflecting off of at least part of a feature represented by an object token 110. For example, the brightness of the light reflecting off the at least part of the feature represented by the object token 110 may be derived from sun position data relative to a particular coordinate position and/or elevation on the Earth and may be specific to a specific time of day and/or time of year. Another example may include using historical temperature and humidity data of a particular location on the Earth to predict certain temperatures across a period of time (e.g., a particular time of day and/or time of year) of one or more features represented by an object token, and displaying the predicted certain temperatures through, for example, through color scale of a particular output of the tangible/virtual design system 100.

In some embodiments, the image sensors 120 may be incorporated into the automation controller 102 and may be capable of capturing images and/or video of the display surface 108, the object tokens 110, the visualization tools 112, the effect tiles 114, and the like. The image sensors 120 may generate and/or may transmit image data corresponding to the captured images to the automation controller 102. The image sensors 120 may include any number of cameras, such as any number of video cameras, any number of depth cameras capable of determining depth and distance to the display surface 108 or objects, any number of infrared cameras, any number of digital cameras, and so forth. In certain embodiments, the image sensors 120 may process the image data before transmission to the automation controller 102. Alternatively, the image sensors 120 may transmit raw image data to the automation controller 102. As a specific example, the image sensors 120 may be an infrared camera that operates to detect an emitted infrared signal from a tracker. The automation controller 102 may receive information based on such detections and process the information to determine and monitor a location and/or an orientation of the display surface 108 and/or the objects on the display surface 108. The automation controller 102 may control operation of the projectors 122 based on the detections, the locations, and/or the orientations. For instance, the image sensors 120 may detect trackers on an exposed surface of the display surface 108 and/or any number of objects on the display surface 108 and may generate location data and/or orientation data based on the detection. The automation controller 102 may receive the location data and/or orientation data from the image sensors 120 and may instruct the projectors 122 to depict image content on projection surfaces of the display surface 108 and/or the objects on the display surface 108. As such, the automation controller 102 may generate and/or adjust image content displayed by the projectors 122 based on location data and/or orientation data.

Additionally, the image sensors 120 may generate image data based on the detection. The automation controller 102 may receive the image data from the image sensors 120 and may process the image data to identify corresponding image content to be projected onto the display surface 108 and/or the objects on the display surface 108. For example, the image data may include one or more images of an object token 110 that corresponds to a ride vehicle. The image sensors 120 may detect a position, an orientation, and/or a configuration of trackers on an exposed surface of the object token 110 and/or may detect machine-readable indicia on the exposed surface of the object token 110. The image sensors 120 may generate tracker data (e.g., location data, orientation data, configuration data) and/or scanning data based on the detected trackers and/or machine-readable indicia. The automation controller 102 may receive the tracker data and/or the scanning data and may identify corresponding image content based on the tracker data and/or the scanning data. For instance, the automation controller 102 may determine a configuration of the trackers on the object token 110 and may compare the configuration with stored tracker configurations in the memory 106. The automation controller 102 may retrieve image content based on the comparison and may control the projectors 122 based on the image content. As such, the automation controller 102 may generate and/or adjust image content displayed by the projectors 122 based on tracker data and/or scanning data for the display surface 108 and/or any number of objects on the display surface 108.

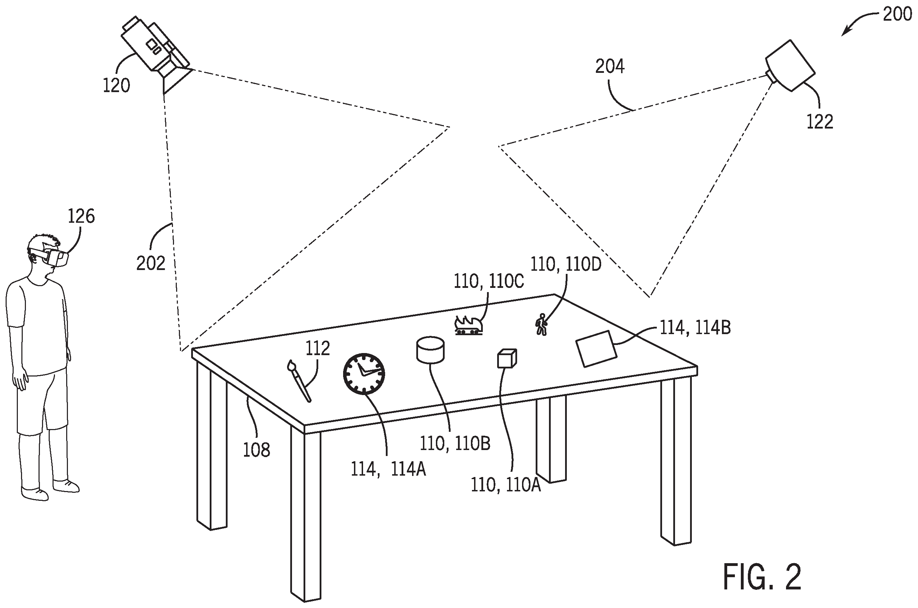

With the foregoing in mind, FIG. 2 is a perspective diagram that illustrates an example embodiment 200 of the tangible/virtual design system 100 in FIG. 1 including the display surface 108, the image sensor 120, the projector 122, and the display 126, in accordance with an embodiment of the present disclosure. In particular, the display 126 may be a head-mounted display worn by a user or multiple users to provide computer-generated imagery, live imagery, virtual reality imagery, augmented reality imagery, mixed reality imagery, and so on. The image sensor 120 may receive control signals from a control system, such as the automation controller 102 of FIG. 1. The image sensor 120 may capture images 202 of the display surface 108 and any number of object tokens 110, visualization tools 112, and/or effect tiles 114 on the display surface 108. The image sensor 120 may include a camera (e.g., an infrared camera) and may detect trackers on an exposed (e.g., upper) surface of the display surface 108, the object tokens 110 (individually referred to herein as a first object token 110A, a second object token 110B, a third object token 110C,and a fourth object token 110D), the visualization tool 112, the effect tiles 114 (individually referred to herein as a first effect tile 114, 114A and a second effect tile 114, 114B), and the like. The image sensor 120 may detect the display surface 108, the object tokens 110, the visualization tool 112, the effect tiles 114, and the like. The image sensor 120 may transmit image data to the control system based on the detections.

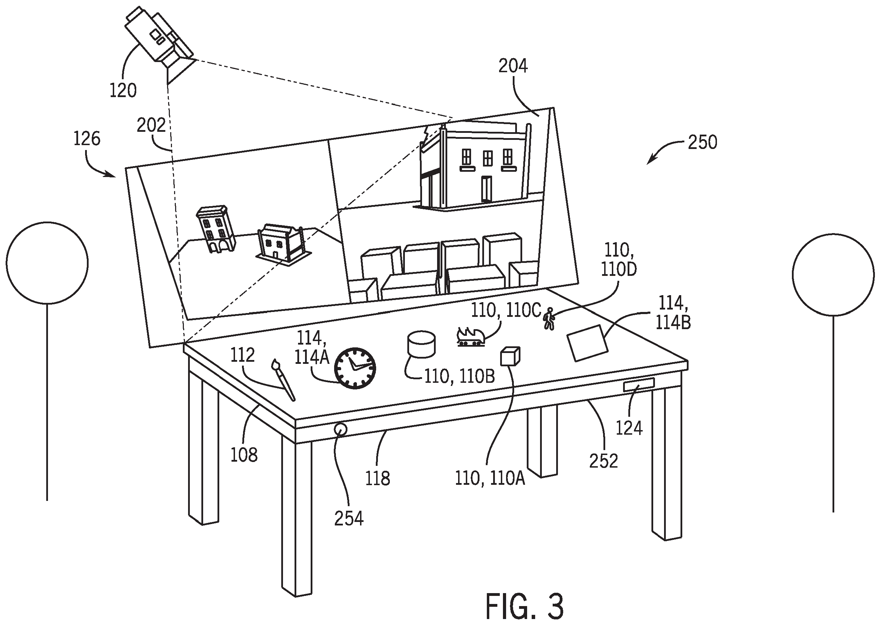

The projector 122 may receive control signals (e.g., an indication of image content) from the control system. The projector 122 may project image content 204 onto any number of projection surfaces, such as the display surface 108, the object tokens 110, and the like. For example, the projector 122 may receive control signals to project the image content 204 onto the display surface 108 that corresponds to a setting for an amusement park attraction or experience. Additionally or alternatively, the display 126 may receive the control signals and display the image content 204. For example, the user may wear the display 126 (e.g., head-mounted display) and view the tangible/virtual design system 100 as augmented reality, mixed reality, virtual reality, and the like. For example, the display 126 may use augmented reality to update the imagery and/or projection mapping to update the imagery for a mixed reality system. The user may interact with the tangible/virtual design system 100 by adjusting the timeline tool 118, adjusting a position of the object tokens 110, and/or the visualization tools 112 and the controller may cause the display 126 to update the viewed imagery. In addition, additional users may wear the display 126 and view the updated imagery. For example, multiple users may wear the display 126 and the control signal may cause the projected image content within each display 126 to be updated in response to actions taken by one user. In other instances, the control signal may cause a first set of displays 126 to be updated and may not cause a second set of displays 126 to be updated, such as if a first group of users may be designing a first area of the amusement park attraction and a second group of users may be designing a second area of the amusement park attraction. The image content 204 may include scenery, buildings, structures, landscapes, natural features, topography, and so forth. Additionally or alternatively, the image content may include representations of ride vehicles, guests, animated figures, and the like. With the foregoing in mind, FIG. 3 is a perspective diagram that illustrates an example embodiment 250 of the tangible/virtual design system 100 in FIG. 1 including the display surface 108, the timeline tool 118, the image sensor 120, and the display 126, in accordance with an embodiment of the present disclosure. In the illustrated embodiment 250, the display 126 includes an electronic display, such as an LED display, a liquid crystal display, a plasma display, or any other suitable electronic display. In certain instances, the display 126 may include a projector (e.g., projector 122 described with respect to FIG. 2) that projects the image content 204 onto a screen for multiple users to view. The display 126 may project image content 204 to visually represent components and features of a real-world location or structure, such as an amusement park attraction or experience. The display 126 may also project image content 204 (e.g., stored image content captured or sensed by the image sensors 120) of one or more users interacting with the display surface 108, the object tokens 110, the visualization tools 112, the effect tiles 114, the timeline tool 118, and the like. In this way, one or more users may collaborate within the tangible/virtual design system 100 and view the object visualizations 116 in real-time or near real-time on the display 126.

Additionally, the display surface 108 may be coupled to the timeline tool 118 and the movement sensor 124, both of which may enable adjusting a time within the tangible/virtual design system 100. The timeline tool 118 may include a physical device, and the movement sensor 124 may generate sensor data indicative of movement of the physical device. As illustrated, the timeline tool 118 includes a pulley system with a rope 252 and a wheel 254 located underneath the display surface 108. The pulley system may be a fixed pulley system, a movable pulley system, a compound pulley system, and so on. The rope 252 may be disposed along a length and a width of the display surface 108, such that multiple users may interact with the rope 252. For example, the rope 252 may be pulled in a clockwise direction (e.g., with respect to the display surface 108), a counterclockwise direction (e.g., with respect to the display surface 108), upwards towards the display surface 108, downwards away from the display surface 108, and the like. The rope 252 may be coupled to the wheel 254, which facilitates movement of the rope 252. While one wheel 254 is illustrated in the example embodiment 250, any suitable number of wheels may be coupled to the display surface 108 to move the rope 252.

In an embodiment, the timeline tool 118 may include an actuator coupled to the automation controller 102, which may control the actuator to move the rope 252. The actuator may include a mechanical linear actuator, an electric actuator, and the like. For example, the actuator may receive control signals from the automation controller 102 and adjust a position of the rope 252 based on the signal. Although the illustrated timeline tool 118 includes a pulley system, in other embodiments, the timeline tool 118 may include a lever, a dial, a slider, a GUI integrated with the display 126, and the like. For example, the timeline tool 118 may include a GUI integrated with the display surface 108, which may include one or more inputs (e.g., buttons) associated with adjusting time. Thus, the GUI may receive user input indicative of advancing time, reversing time, and/or pausing time.

The movement sensor 124 may generate sensor data indicative of movement of the rope 252 relative to the display surface 108. For example, the movement sensor 124 may include a pressure sensor, an accelerometer, a proximity sensor, a touch switch, a force sensor, and the like. The movement sensor 124 may detect a speed of movement, a direction of movement, and/or a position of the rope 252 relative to the display surface 108. For example, the movement sensor 124 may generate sensor data indicative of the rope 252 in a top position, a middle position, and/or a bottom position and transmit the sensor data to the control system based on the detected position. In another example, the movement sensor 124 may generate sensor data indicative of movement of the rope 252, such as in a clockwise direction, a counterclockwise direction, upwards, downwards, and the like. The movement sensor 124 may transmit the sensor data to the control system.

The control system may receive the sensor data and adjust a simulation time or a real, project time. For example, clockwise movement of the rope 252 may correspond to advancing the simulation time, while counterclockwise movement of the rope 252 may correspond to reversing the simulation time. In another example, a top position of the rope 252 may correspond to advancing time, a middle position of the rope 252 may correspond to stop or pausing time, and a bottom position of the rope 252 may correspond to reversing time. In certain instances, the adjustment of time may be associated with a speed of movement. For example, slowly moving the rope in a clockwise direction may increment the time more slowly in comparison to quickly moving the rope. The control system may output a control signal based on the sensor data.

The display 126 may receive control signals (e.g., an indication of image content) from the control system and project image content 204. In certain instances, the image content 204 may include the object visualizations 116 within the tangible/virtual design system 100. For example, the display 126 may display image content 204 of a ride vehicle progressing through a ride as the rope 252 moves in a clockwise direction (e.g., as simulation time advances). In another example, the image content 204 may include guest throughput at a vendor as simulation time advances and the image content 204 may be paused if the rope 252 stops moving (e.g., stopping or pausing simulation time).

In other instances, the image content 204 may include image data of the one or more users interacting with the tangible/virtual design system 100 and the display 126 may project a playback of the interactions. For example, the image sensors 120 may generate image data of multiple users interacting with the object tokens 110, the visualization tools 112, the effect tiles 114, and the like over a period of time. The display 126 may project (e.g., playback) the image data at a speed of the playback that may be based on the indication of the movement.

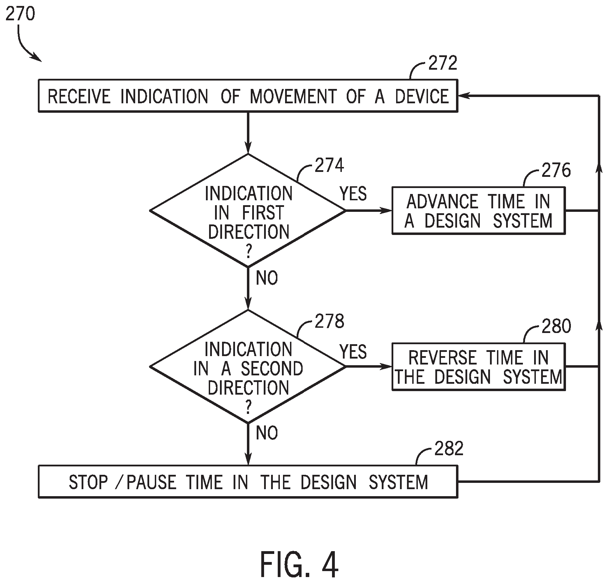

With the foregoing in mind, FIG. 4 illustrates a flowchart of a method or process 270 for adjusting time (e.g., simulation time, real, project time) within the tangible/virtual design system 100 of FIG. 1, in accordance with embodiments of the present disclosure. While the process 270 is described as being performed by the automation controller 102, it should be understood that the process 270 may be performed by any suitable device or processing circuitry, such as the processor 104 and so forth, that may control and/or communicate with components of a tangible/virtual design system 100. Furthermore, while the process 270 is described using steps in a specific sequence, it should be understood that the present disclosure contemplates that the described steps may be performed in different sequences than the sequence illustrated, and certain described steps may be skipped or not performed altogether. In some embodiments, the process 270 may be implemented by executing instructions stored in a tangible, non-transitory, computer-readable medium, such as the memory 106, using any suitable processing circuitry, such as the processor 104.

At block 272, the automation controller 102 receives an indication of movement of a device (e.g., the timeline tool 118). For example, the timeline tool 118 may be moved in clockwise direction or a counterclockwise direction and the movement sensor 124 may generate sensor data indicative of the movement. Additionally, the sensor data may include a speed of movement and/or a position of the timeline tool 118. For example, the timeline tool 118 may be slowly moved (e.g., moved a small amount in a period of time) to cause the time to advance or rewind at a first, slower rate, or more quickly moved (e.g., moved a greater amount in the period of time) to cause the time to more advance or rewind at a second, faster rate.

At block 274, the automation controller 102 determines if the indication is in a first direction. For example, the timeline tool 118 may move in a clockwise direction or a counterclockwise direction relative to the display surface 108. In an instance, movement in a clockwise direction may be associated with advancing time in the tangible/virtual design system 100 while movement in a counterclockwise direction may be associated with reversing time, or vice versa. In another example, the timeline tool 118 may be moved to a top position, a bottom position, and/or a middle position (e.g., with respect to the display surface 108). The top position may be adjacent the display surface 108, the middle position may be adjacent and/or under the top position, and the bottom position may be adjacent and/or under the middle position. In certain instances, the top position may be associated with advancing time, the bottom position may be associated with reversing time, and the middle position may be associated with pausing time. In other instances, the top position may be associated with reversing time and the bottom position may be associated with advancing time.

If the automation controller 102 determines the indication is in the first direction, then at block 276 the automation controller 102 advances time in the tangible/virtual design system 100. The controller 102 may adjust the image data based on the advancement of time and control the display surface 108 to project the object visualizations 116. For example, the image data may include guest throughput at an attraction throughout a day. The controller 102 may simulate guest throughput at a simulated advanced time based on the timeline tool 118 being moved in the first direction. In another example, the image data may include users interacting with the object tokens 110 and the controller 102 may advance the project time based on the timeline tool 118 being moved in the first direction. The process 270 may return to block 272 to receive another indication of movement of the device.

If the automation controller 102 determines the indication is not in the first direction, then at block 278, the automation controller determines if the indication is in a second direction. For example, the second direction may be counterclockwise movement if the first direction is clockwise movement. In another example, the second direction may be movement to the bottom position.

If the automation controller 102 determines the indication is in the second direction, then at block 280, the automation controller 102 reverses time in the tangible/virtual design system 100. The controller 102 may adjust the image data based on the reversal of time within the tangible/virtual design system 100 and transmit the image data to the display 126. For example, the image data may include a ride vehicle moving backwards through a ride. In another example, the image data may include a playback of user interactions with the object tokens 110 of the tangible/virtual design system 100 over a period of time. The process 270 may return to block 272 to receive another indication of movement of the device.

If the automation controller 102 determines the indication is not in the second direction, then at block 282, the automation controller 102 stops or pauses time in the tangible/virtual design system 100. For example, pulling the rope 252 in a lateral direction or longitudinal direction with respect to the display 126 may be associated with stopping or pausing time within the tangible/virtual design system 100. In another example, positioning the rope 252 in a middle position may be associated with stopping or pausing time. As such, the controller 102 may determine if the movement is not in a first direction or a second direction and the controller 102 may update the image data to stop or pause at a certain point. The process 270 may return to block 272 to receive indication of movement of the device.

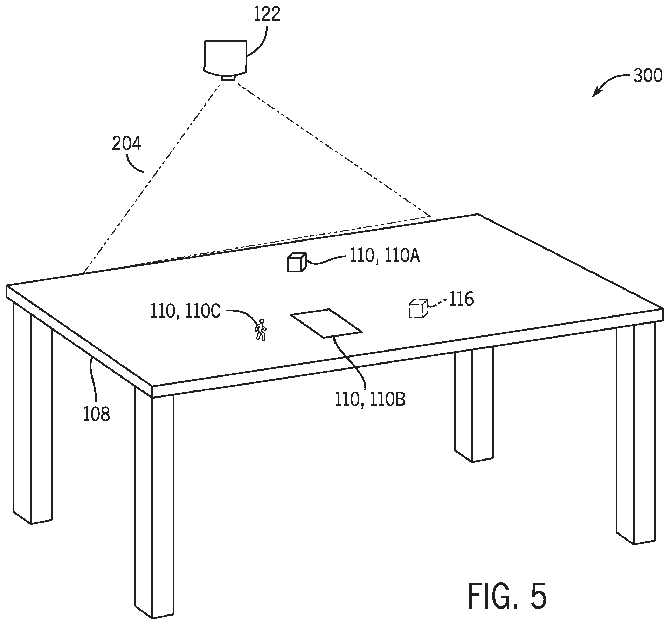

With the foregoing in mind, FIG. 5 is a perspective diagram that illustrates an example embodiment 300 of the tangible/virtual design system 100 in FIG. 1 including the display surface 108 and the projector 122, in accordance with an embodiment of the present disclosure. The projector 122 may project image content 204 onto the display surface 108 to visually represent components and features of an amusement park attraction or experience. For example, the tangible/virtual design system 100 in FIG. 1 may be utilized to design a Pepper's Ghost illusion. The Pepper's Ghost illusion utilizes reflective properties of translucent or transparent materials (e.g., glass, plastic, or the like) to virtually project images into a scene for viewing by guests. For example, an angled pane of glass may be positioned in front of a stage and imagery may be projected toward the glass from outside of a line of sight of the audience and then partially reflected toward the audience by the pane of glass.

As shown in FIG. 5, a first object token 110, 110A may represent imagery designed to be projected towards a second object token 110, 110B that represents a reflective material, such as an angled pane of glass. A third object token 110, 110C may represent one or more guests viewing the illusion. The image sensors 120 in FIG. 1 may capture image data of the object tokens 110 and determine position data, orientation data, configuration data, and the like for each of the object tokens 110. Additionally or alternatively, the image sensors 120 may capture image data and may detect trackers and/or machine-readable indicia for the object tokens 110. The image sensors 120 may identify the object tokens based on the detected trackers and/or machine-readable indicia. In some embodiments, the automation controller 102 may receive the image data and may identify the object tokens based on tracker data and/or scanned data generated by the image sensors 120. The automation controller 102 may determine the first object token 110, 110A corresponds to a device that projects imagery to provide a visual effect, the second object token 110, 110B corresponds to a reflective material or surface, and the third object token 110, 110C corresponds to one or more guests. The automation controller 102 may determine positions and orientations of the first object token 110, 110A and the second object token 110, 110B and may generate position data and orientation data for the object tokens 110. The automation controller 102 may utilize the position data and orientation data to determine a position and orientation of reflected imagery perceived by the audience. As such, the automation controller 102 may instruct the projector 122 to generate an object visualization 116 that corresponds to the reflected imagery. The projector 122 may project image content 204 onto the display surface 108 at a corresponding position and orientation based on instructions from the automation controller 102. Accordingly, the tangible/virtual design system 100 may accurately represent visual effects to provide a better understanding of amusement park attractions or experiences

Additionally or alternatively, any number of the object tokens 110 may include actuators, such as electronic motors, capable of moving the object tokens along and about the display surface 108 to different positions. For example, a user may input a desired position and/or desired orientation for the reflected imagery in the Pepper's Ghost illusion via a user input interface of the control system or any other suitable input device (e.g., mouse, keyboard, and so forth). Additionally or alternatively, a fourth object token may correspond to the reflected imagery and may be disposed on the display surface 108. The image sensors 120 may detect the position and/or the orientation of the fourth object token and may generate position and/or orientation data based on the detection. Additionally or alternatively, the user may place the third object token 110, 110C that corresponds to one or more guests of the amusement park at a second desired position and/or second desired orientation. The image sensors 120 may detect the position and/or the orientation of the third object token 110, 110C and may generate or update position and/or orientation data based on the detection. The automation controller 102 may receive the position and/or orientation data and may determine locations and/or orientations for the first object token 110, 110A and the second object token 110, 110B. In an instance, the automation controller 102 may instruct the projector 122 to project image content corresponding to the determined locations and/or orientations. As such, the projector 122 may project a marker or indicator onto the display surface 108 that indicates the location and/or orientation of the projected imagery and/or the reflective material. Additionally or alternatively, the automation controller 102 may control the actuators of the first object token 110, 110A and/or the second object token 110, 110B to move to the determined locations and/or orientations. The tangible/virtual design system 100 may also monitor the display surface and object tokens 110 for updates to their positions and/or orientations. Accordingly, adjustment of the position of any of the object tokens 110, 110A, 110B, 110C may result in adjustment of the remaining object tokens 110 and/or the object visualizations 116.

In certain embodiments, the automation controller 102 may compare the orientation data and/or position data with constraint criteria (e.g., line of sight criteria, threshold angles, brightness threshold, and the like). The automation controller 102 may determine the reflected imagery may not be produced based on one or more of the constraint criteria. For example, the automation controller 102 may determine another object is disposed between the projected imagery object token 110, 110A and the reflective material object token 110, 110B. As such, the projected imagery may not be reflected by the reflective material. The automation controller 102 may instruct one or more components of the tangible/virtual design system 100 based on the constraint criteria. For instance, the automation controller 102 may instruct the projector 122 to project image content that identifies one or more incorrectly disposed object tokens 110. Additionally or alternatively, the automation controller 102 may instruct the projector 122 and/or the display 126 to display a notification indicative of the constraint criteria.

In some embodiments, the tangible/virtual design system 100 may capture image data that includes configurations, positions, and/or orientations of object tokens 110, visualization tools 112, and/or effect tiles 114. The image sensors 120 may generate configuration data, position data, and/or orientation data based on the detected objects. The automation controller 102 may receive the configuration data, position data, and/or orientation data and may store the data as a particular design. For example, the tangible/virtual design system 100 may receive an input that instructs the automation controller to store the data as a design for an amusement park attraction or experience. The automation controller 102 may store the data and images in the memory 106. Accordingly, the tangible/virtual design system 100 may store a database of any number of amusement park attraction designs. Additionally, the automation controller 102 may retrieve stored designs and may control components of the tangible/virtual design system 100 based on the stored design. For example, the automation controller 102 may retrieve configuration data, position data, orientation data, image data, and the like. The automation controller 102 may instruct the projector 122 based on the stored design. For example, the projector 122 may project image content that includes indicators for placement of object tokens 110, visualization tools 112, effect tiles, and so forth on the display surface 108 and/or a staging surface. Additionally or alternatively, the automation controller 102 may instruct actuators of the objects to move the objects to desired positions and/or orientations based on the stored design.

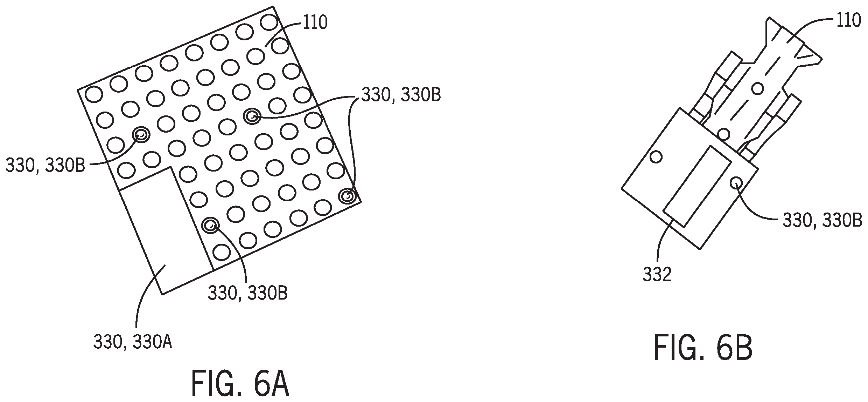

With the foregoing in mind, FIG. 6A is a perspective diagram of an embodiment of the object token 110 with one or more trackers 330 (individually referred to herein as a first tracker 330A and a second tracker 330B). As illustrated, the object token 110 includes a block with a first tracker 330, 330A and a second tracker 330, 330B on a surface of the object token 110. The object token 110 may include any suitable shape, size, or color. The automation controller 102 may identify an object visualization 116 (e.g., virtual model) associated with the object token 110 based on the one or more trackers 330. For example, the first tracker 330, 330A includes an identifier (e.g., a number, a bar code, a Quick Response (QR) code, a radio frequency (RF) tag) that may be associated with an object visualization 116 stored in the memory 106. The automation controller 102 may identify the first tracker 330, 330A on the object token 110 and compare the first tracker 330, 330A to stored tracker configurations (e.g., numbers, bar codes, QR codes, RF tags) in the memory 106. The automation controller 102 may determine a match between the first tracker 330, 330A and one or more stored tracker configurations and identify and/or retrieve image content (e.g., object visualization 116) corresponding to the object token 110 and may control operation of the projectors 122 to display the image content. For example, the first tracker 330, 330A may correspond to a building and the automation controller 102 may identify the corresponding building based on the first tracker 330, 330A. The automation controller 102 may control operation of the projectors 122 to generate a visualization of the building on the display surface 108.

Additionally or alternatively, the configuration (e.g., position, orientation) of the second trackers 330, 330B may be utilized by the automation controller 102 to identify the corresponding object visualization 116. The second trackers 330, 330B may be in a unique configuration which may be mapped to a corresponding object virtualization 116 stored in a database, such as the memory 106. As illustrates, the second trackers 330, 330B may be four dots in a rectangular configuration. The automation controller 102 may identify the object token 110 based on the rectangular configuration of the second trackers 330, 330B and may identify the corresponding object virtualization 116. For example, the second trackers 330, 330B may be associated with a building.

Moreover, the second trackers 330, 330B may be utilized to determine a position and/or orientation of the object token 110 within the tangible/virtual design system 100. As illustrated, the second trackers 330, 330B include four dots, however the second trackers 330, 330B may include any suitable number of dots. The image sensors 120 may generate image data and the automation controller 102 may determine tracker data (e.g., location data, orientation data, configuration data) based on the image data. The automation controller 102 may also determine a configuration of the second trackers 330, 330B on the surface of the object token 110 to determine a position, orientation, and/or configuration of the corresponding object virtualization 116. For example, the corresponding object virtualization 116 may be a building, and a layout of the building (e.g., windows, doors, rooms) may be determined based on the configuration of the second trackers 330, 330B. Indeed, the automation controller 102 may instruct the projector 122 to generate the object visualizations 116 based on the configuration of the second trackers 330, 330B on the object token 110.

With the foregoing in mind, FIG. 6B is a perspective diagram of an object token 110 with trackers 330 and machine-readable indicia 332. As illustrated, the object token 110 includes a train model with trackers 330 and machine-readable indicia 332 on an exposed surface (e.g., projection surface). As illustrated, the trackers 330 include four dots positioned across the exposed surface and used by the automation controller 102 to determine a position and/or an orientation of the object token 110 within the tangible/virtual design system 100.

The object token 110 may also include machine-readable indicia 332, such as a barcode, a QR code, an RF tag, and the like. The illustrated machine-readable indicia 332 includes a QR code that may be captured the image sensors 120 as image data. The automation controller 102 may identify the QR code within the image data and compare the QR code to stored machine-readable indicia stored in the memory 106. The automation controller 102 may determine a match between the machine-readable indicia 332 and the stored machine-readable indicia to determine an associated object visualization 116. For example, the automation controller 102 may identify one or more attributes of the object token 110, such as a color, a texture, a material, a speed of movement, a number of passengers, a cost, and so on. The automation controller 102 may instruct the projectors 122 to adjust the object visualization 116 based on the attributes of the object token 110 (e.g., to display the color, the texture, the material, an indication of the speed of the movement, the number of passengers, an indication of the cost, and so on).

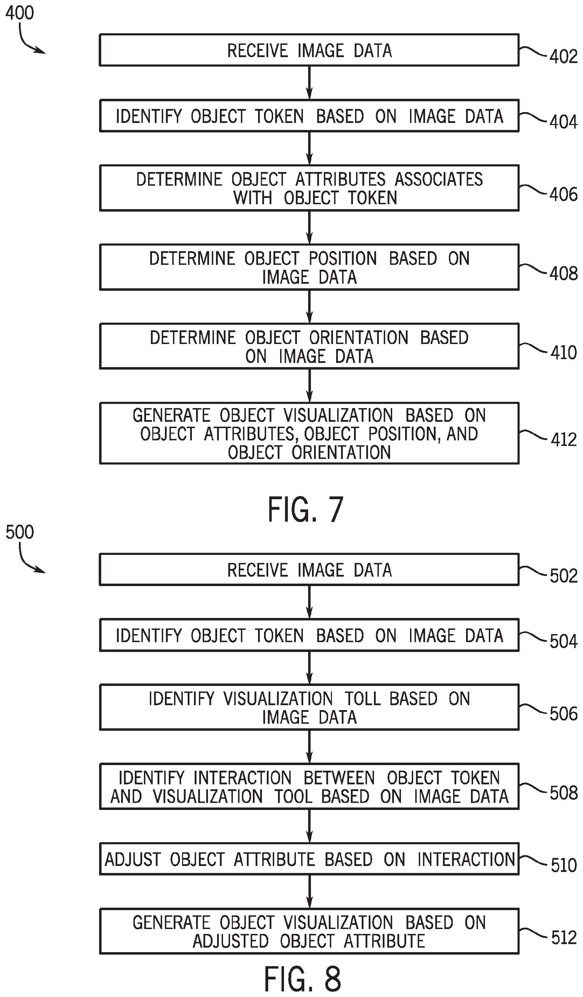

With the foregoing in mind, FIG. 7 illustrates a flowchart of a process 400 for operating the tangible/virtual design system 100 of FIG. 1, in accordance with an embodiment of the present disclosure. While the process is described as being performed by the automation controller 102, it should be understood that the process 400 may be performed by any suitable device or processing circuitry, such as the processor 104 and so forth, that may control and/or communicate with components of a tangible/virtual design system 100. Furthermore, while the process 400 is described using steps in a specific sequence, it should be understood that the present disclosure contemplates that the described steps may be performed in different sequences than the sequence illustrated, and certain described steps may be skipped or not performed altogether. In some embodiments, the process 400 may be implemented by executing instructions stored in a tangible, non-transitory, computer-readable medium, such as the memory 106, using any suitable processing circuitry, such as the processor 104.

At block 402, the automation controller 102 receives image data via the image sensors 120. The image sensors 120 may detect one or more object tokens 110 on the display surface 108 and may capture the image data based on the detection. In some embodiments, the image sensors 120 may detect the image data in the form of trackers 330 and/or machine-readable indicia 332 displayed on the object tokens 110. At block 404, the automation controller 102 may identify the object tokens 110 based on the image data. The automation controller 102 may process the image data to detect the trackers 330 and/or machine-readable indicia 332. In some embodiments, the automation controller 102 may scan the machine-readable indicia 332 to identify a corresponding object (e.g., building, ride vehicle, ride path, guest, scenery, and the like). The automation controller 102 may also determine a configuration of the trackers 330 displayed on a surface of the object token 110. Each object token 110 may have a unique configuration of trackers that may be mapped to a corresponding object stored in a database, such as the memory 106. As such, the configuration of the trackers 330 may serve as an identifier of the object token 110.

The automation controller 102 may determine attributes (block 406) associated with the identified object token 110. For example, the automation controller 102 may retrieve physical attributes (e.g., size, color, texture, material, and the like) for the identified object token. For instance, the object token 110 may correspond to a ride vehicle. The automation controller 102 may receive and/or retrieve attributes of the ride vehicle, such as a design, a shape, a color, a size, a number of seats, a number of wheels, restraints, a presence of one or more riders, a number of riders, and so forth.

The automation controller 102 may also determine position data (block 408) for the object token 110 based on the image data. For example, the automation controller 102 may determine a position of the object token 110 on the display surface 108. The automation controller 102 may also determine a position of the object token 110 relative to one or more other object tokens 110, one or more visualization tools 112, and/or one or more effect tiles 114 on the display surface 108. At block 410, the automation controller 102 may determine orientation data for the object token 110 based on the image data. For example, the automation controller 102 may determine an orientation of the trackers 330 displayed on a surface of the object token 110. The automation controller 102 may determine the trackers are located on a front surface, a top surface, a rear surface, a bottom surface, a side surface, and so forth of the object token 110. Accordingly, the automation controller 102 may utilize the orientation of the trackers 330 to generate orientation data for the object token 110.

The automation controller 102 may generate (block 412) object visualization 116 based at least in part on the object attributes, position data, and/or the orientation data. For example, the automation controller 102 may determine if a ride vehicle object token 110 is oriented with a top surface facing upwards towards the image sensors 120 and/or the projectors 122. As such, the automation controller 102 may instruct the projectors 122 to project image content that includes a visualization of the top surface of the ride vehicle onto the object token 110 and/or the display surface 108. Accordingly, the tangible/virtual design system 100 may provide visualizations to accurately represent features and aspects of an amusement park attraction or experience.

With the foregoing in mind, FIG. 8 illustrates a flowchart of a process 500 for operating the tangible/virtual design system 100 of FIG. 1, in accordance with an embodiment of the present disclosure. While the process is described as being performed by the automation controller 102, it should be understood that the process 500 may be performed by any suitable device or processing circuitry, such as the processor 104 and so forth, that may control and/or communicate with components of a tangible/virtual design system. Furthermore, while the process 500 is described using steps in a specific sequence, it should be understood that the present disclosure contemplates that the described steps may be performed in different sequences than the sequence illustrated, and certain described steps may be skipped or not performed altogether. In some embodiments, the process 500 may be implemented by executing instructions stored in a tangible, non-transitory, computer-readable medium, such as the memory 106, using any suitable processing circuitry, such as the processor 104.

At block 502, the automation controller 102 receives image data via the image sensors 120. The image sensors 120 may detect one or more object tokens 110, one or more visualization tools 112, and one or more effect tiles 114 on the display surface 108 and may capture the image data based on the detection. In some embodiments, the image sensors 120 may detect trackers 330 and/or machine-readable indicia 332 displayed on the object tokens 110, the visualization tools 112, and the effect tiles 114. At block 504, the automation controller 102 may identify the object tokens 110 based on the image data. The automation controller 102 may process the image data to detect the trackers 330 and/or machine-readable indicia 332. In some embodiments, the automation controller 102 may scan the machine-readable indicia 332 to identify a corresponding object (e.g., building, ride vehicle, ride path, guest, scenery, and the like). The automation controller 102 may also determine a configuration of the trackers 330 displayed on a surface of the object token 110. Each object token 110 may have a unique configuration of trackers 330 that may be mapped to a corresponding object stored in a database, such as the memory 106. As such, the configuration of the trackers 330 may serve as an identifier of the object token 110.

At block 506, the automation controller 102 may identify the visualization tools 112 based on the image data. The automation controller 102 may process the image data to detect markers and/or machine-readable indicia displayed on a surface of the visualization tools 112. In some embodiments, the automation controller 102 may control the image sensors 120 to scan the machine-readable indicia to identify a corresponding visualization tool 112 (e.g., a paintbrush tool, a texture tool, a material tool, a magnifying tool, a measurement tool, a filter tool, and the like). The automation controller 102 may also determine a configuration of the trackers displayed on the surface of the visualization tool 112. Each visualization tool may have a unique configuration of trackers that may be mapped to a corresponding visualization tool stored in a database, such as the memory 106. As such, the configuration of the trackers may server as an identifier of the visualization tool 112.

At block 508, the automation controller 102 may identify an interaction between the object token 110 and the visualization tool 112 based on the image data. The automation controller 102 may process the image data to determine position data and/or orientation data for the object tokens 110 and/or the visualization tools 112. The automation controller 102 may utilize the position data and/or the orientation data to determine the visualization tool 112 satisfies interaction criteria (e.g., within a threshold distance from the object token 110, in contact with the object token 110) based on the image data.

The automation controller may adjust (block 510) one or more attributes of the object token 110 based on the identified interaction. For example, the visualization tool 112 may correspond to a material tool that updates a material attribute, a texture attribute, a color attribute, and so forth for the object token 110. The automation controller 102 may store the adjusted attributes in the memory 106. At block 512, the automation controller 102 may generate object visualization 116 for the object token 110 based on the adjusted object attributes and may control the projector 122 to project image content based on the adjusted object attributes. As such, the tangible/virtual design system 100 may generate and/or adjust object visualizations 116 to reflect interactions between the object tokens 110 and various visualization tools 112.

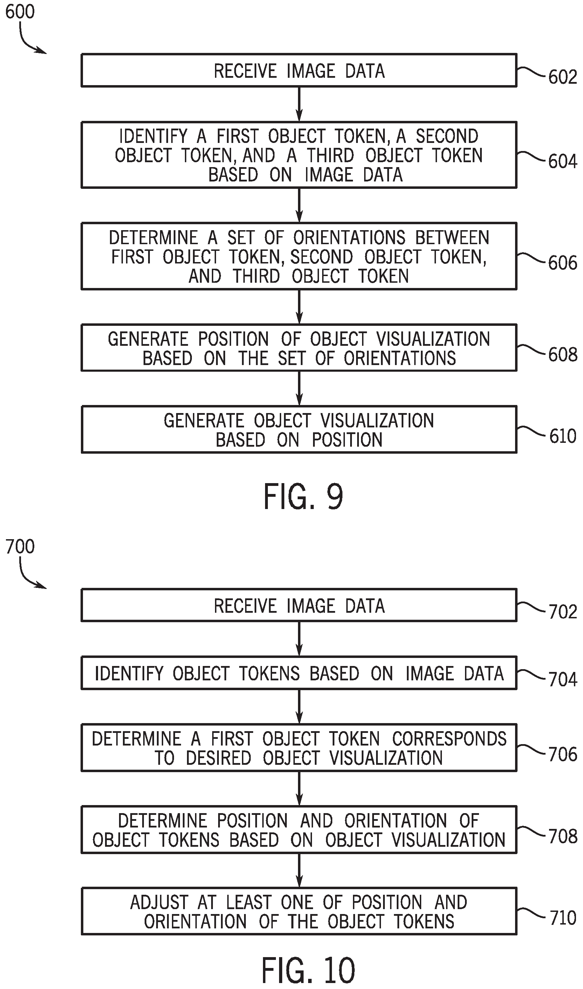

With the foregoing in mind, FIG. 9 illustrates a flowchart of a process 600 for operating the tangible/virtual design system 100 of FIG. 1, in accordance with an embodiment of the present disclosure. While the process is described as being performed by the automation controller 102, it should be understood that the process 600 may be performed by any suitable device or processing circuitry, such as the processor 104 and so forth, that may control and/or communicate with components of a tangible/virtual design system. Furthermore, while the process 600 is described using steps in a specific sequence, it should be understood that the present disclosure contemplates that the described steps may be performed in different sequences than the sequence illustrated, and certain described steps may be skipped or not performed altogether. In some embodiments, the process 600 may be implemented by executing instructions stored in a tangible, non-transitory, computer-readable medium, such as the memory 106, using any suitable processing circuitry, such as the processor 104.

At block 602, the automation controller 102 receives image data via the image sensors 120. The image sensors 120 may detect one or more object tokens 110, one or more visualization tools 112, and one or more effect tiles 114 on the display surface 108 and may capture the image data based on the detection. In some embodiments, the image sensors 120 may detect trackers 330 and/or machine-readable indicia 332 displayed on the object tokens 110, the visualization tools 112, and the effect tiles 114. At block 604, the automation controller 102 may identify multiple object tokens 110 based on the image data, such as the first object token 110, 110A, the second object token 110, 110B, and the third object token 110, 110C. The automation controller 102 may process the image data to detect the trackers 330 and/or machine-readable indicia 332. In some embodiments, the automation controller 102 may scan the machine-readable indicia 332 to identify a corresponding object (e.g., building, ride vehicle, ride path, guest, scenery, and the like). The automation controller 102 may also determine a configuration of the trackers 330 displayed on a surface of the object token 110. Each object token 110 may have a unique configuration of trackers that may be mapped to a corresponding object stored in a database, such as the memory 106. As such, the configuration of the trackers may serve as an identifier of the object token 110.

At block 606, the automation controller 102 may generate position data and/or orientation data for one or more of the object tokens 110. In some embodiments, the automation controller 102 may determine distances between the object tokens 110 and angles between the object tokens 110. The automation controller 102 may generate (block 608) visualization position data and/or visualization orientation data for an object visualization 116 based on the image data. For example, as shown in FIG. 3, position data and/or orientation data for the first object token 110, 110A and the second object token 110, 110B may be utilized to determine visualization position data and/or visualization orientation data for the object visualization 116. The visualization position data may include a relative position of the object visualization 116 to one or more object tokens 110 and/or an absolute position of the object visualization 116 on the display surface 108. The visualization orientation data may include a relative orientation of the object visualization 116 to one or more object tokens 110 and/or an absolute orientation relative to the display surface 108.

At block 610, the automation controller 102 may generate the object visualization 116 based at least in part on the visualization position data, visualization orientation data, the identified object tokens 110, or any combination thereof. The automation controller 102 may detect the first object token 110, 110A and may identify the first object token 110, 110A corresponds to projected imagery. The automation controller 102 may receive image content based on the identified first object token 110, 110A and may instruct the projector 122 to project the object visualization 116 that includes reflected imagery. As such, the tangible/virtual design system 100 may provide for display of visual effects and representations of illusions, such as Pepper's Ghost.

With the foregoing in mind, FIG. 10 illustrates a flowchart of a process 700 for operating the tangible/virtual design system 100 of FIG. 1, in accordance with an embodiment of the present disclosure. While the process is described as being performed by the automation controller 102, it should be understood that the process 700 may be performed by any suitable device or processing circuitry, such as the processor 104 and so forth, that may control and/or communicate with components of a tangible/virtual design system. Furthermore, while the process 700 is described using steps in a specific sequence, it should be understood that the present disclosure contemplates that the described steps may be performed in different sequences than the sequence illustrated, and certain described steps may be skipped or not performed altogether. In some embodiments, the process 700 may be implemented by executing instructions stored in a tangible, non-transitory, computer-readable medium, such as the memory 106, using any suitable processing circuitry, such as the processor 104.

At block 702, the automation controller 102 receives image data via the image sensors 120. The image sensors 120 may detect one or more object tokens 110, one or more visualization tools 112, and one or more effect tiles 114 on the display surface 108 and may capture the image data based on the detection. In some embodiments, the image sensors 120 may detect trackers and/or machine-readable indicia displayed on the object tokens 110, the visualization tools 112, and the effect tiles 114. At block 704, the automation controller 102 may identify the object tokens 110 based on the image data. The automation controller 102 may process the image data to detect the trackers 330 and/or machine-readable indicia 332. In some embodiments, the automation controller 102 may scan the machine-readable indicia 332 to identify a corresponding object (e.g., building, ride vehicle, ride path, guest, scenery, and the like). The automation controller 102 may also determine a configuration of the trackers displayed on a surface of the object token 110. Each object token 110 may have a unique configuration of trackers 330 that may be mapped to a corresponding object stored in a database, such as the memory 106. As such, the configuration of the trackers 330 may serve as an identifier of the object token 110.

At block 706, the automation controller 102 may determine at least one of the object tokens 110 corresponds to a location and/or orientation for an object visualization 116. For example, the object token 110 may correspond to a location and/or orientation of reflected imagery for a Pepper's Ghost illusion. The automation controller 102 may determine (block 708) location data (e.g., position data and/or orientation data) for any number of object tokens 110 based on the location and/or orientation of the reflected imagery. For example, the automation controller 102 may determine position data and/or orientation data for a reflective material object token and/or a projected imagery object token to facilitate design of the illusion.

At block 710, the automation controller 102 may adjust the position and/or the orientation of the reflective material object token and/or the projected imagery object token based on the position data and/or the orientation data. The automation controller 102 may instruct actuators of the display surface 108 and/or the object tokens 110 to move the object tokens to the adjusted position and/or the adjusted orientation. Additionally or alternatively, the automation controller 102 may instruct the projectors 122 to project markers or indicators on the display surface 108 that correspond to the adjusted positions and/or adjusted orientations.

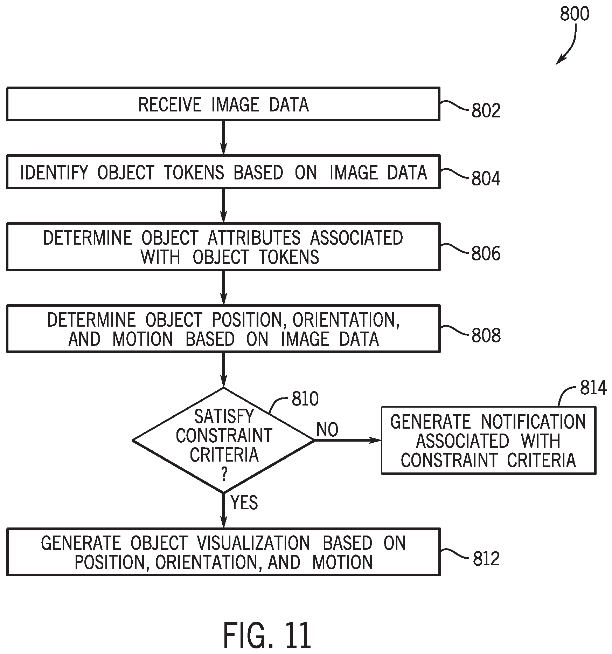

With the foregoing in mind, FIG. 11 illustrates a flowchart of a process 800 for operating the tangible/virtual design system 100 of FIG. 1, in accordance with an embodiment of the present disclosure. While the process is described as being performed by the automation controller 102, it should be understood that the process 800 may be performed by any suitable device or processing circuitry, such as the processor 104 and so forth, that may control and/or communicate with components of a tangible/virtual design system. Furthermore, while the process 800 is described using steps in a specific sequence, it should be understood that the present disclosure contemplates that the described steps may be performed in different sequences than the sequence illustrated, and certain described steps may be skipped or not performed altogether. In some embodiments, the process 800 may be implemented by executing instructions stored in a tangible, non-transitory, computer-readable medium, such as the memory 106, using any suitable processing circuitry, such as the processor 104.

At block 802, the automation controller 102 receives image data via the image sensors 120. The image sensors 120 may detect one or more object tokens 110, one or more visualization tools 112, and one or more effect tiles 114 on the display surface 108 and may capture the image data based on the detection. In some embodiments, the image sensors 120 may detect trackers and/or machine-readable indicia displayed on the object tokens 110, the visualization tools 112, and the effect tiles 114. At block 804, the automation controller 102 may identify the object tokens 110 based on the image data. The automation controller 102 may process the image data to detect the markers and/or machine-readable indicia. In some embodiments, the automation controller 102 may scan the machine-readable indicia to identify a corresponding object (e.g., building, ride vehicle, ride path, guest, scenery, and the like). The automation controller 102 may also determine a configuration of the trackers displayed on a surface of the object token 110. Each object token 110 may have a unique configuration of trackers 330 that may be mapped to a corresponding object stored in a database, such as the memory 106. As such, the configuration of the trackers may serve as an identifier of the object token 110.

The automation controller 102 may determine attributes (block 806) associated with the identified object tokens 110. For example, the automation controller 102 may retrieve physical attributes (e.g., size, color, texture, material, and the like) for the identified object token. For instance, the object token 110 may correspond to a ride vehicle. The automation controller 102 may receive and/or retrieve attributes of the ride vehicle, such as a design, a shape, a color, a size, a number of seats, a number of wheels, restraints, and so forth. At block 808, the automation controller 102 may generate position data and/or orientation data for one or more of the object tokens 110. In some embodiments, the automation controller 102 may determine distances and orientations between the object tokens 110, the visualization tools 112, and the effect tiles 114. Additionally or alternatively, the automation controller 102 may determine a speed or a velocity associated with the object tokens 110, the visualization tools 112, and the effect tiles 114. In some embodiments, the movement of the object tokens 110 may be scaled relative to a full-scale model. For example, a guest object token may move at a fraction of the speed (e.g., one fifth, one tenth, one twentieth, and so forth) of an actual guest of the amusement park attraction or experience, a ride vehicle object token may move at a fraction of the speed of a full-size ride vehicle, the ride vehicle object token may move a fraction of the distance of the full-size ride vehicle, and so forth.

At block 810, the automation controller 102 may determine whether any of the object tokens satisfy at least one constraint criteria. For example, the constraint criteria may include a maximum speed criteria for a ride vehicle. The automation controller 102 may compare the determined speed of the ride vehicle object token with the maximum speed criteria. If the determined speed exceeds the maximum speed criteria (NO path of block 810), the automation controller 102 may generate (block 814) a notification based on the failed constraint criteria and may instruct the projector 122 and/or the display 126 to display the notification. If the determined speed falls within the maximum speed criteria (YES path of block 810), the automation controller 102 may generate and/or adjust (block 812) the object visualization 116 based on the movement of the object token 110.

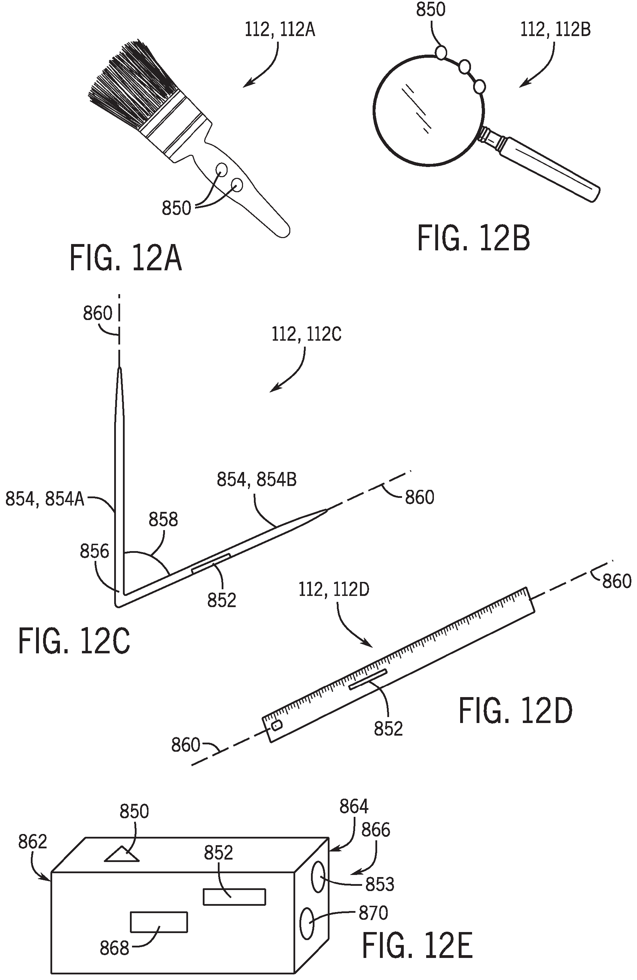

FIGS. 12A-12D are schematic diagrams that illustrate an example embodiment of visualization tools 112 of the tangible/virtual design system 100 of FIG. 1. The visualization tool 112 may include one or more trackers and/or machine-readable indicia positioned on one or more surfaces that may be captured by the image sensor 120. As such, the automation controller 102 may identify a type of the visualization tool 112 based on the one or more trackers and/or machine-readable indicia in the image data. Moreover, the automation controller 102 may identify interactions between the visualization tool 112 and the object token 110 and control the projectors 122 to update the object visualization 116 based on the interactions. For example, interactions may cause object attributes (e.g., color, material, texture) to be updated or measured (e.g., length, width, angle, angular motion, brightness, sound volume, temperature).

With the foregoing in mind, FIG. 12A is a schematic diagram illustrating an example embodiment of the visualization tool 112 of the tangible/virtual design system 100 of FIG. 1 as a paintbrush tool 112, 112A. As illustrated, the paintbrush tool 112, 112A includes trackers 850, which includes two dots configured in a line. The automation controller 102 may identify the paintbrush tool 112, 112A by comparing the configuration of the trackers 850 to stored tracker configurations in the memory 106. In certain instances, the automation controller 102 may use the trackers 850 and image processing techniques to identify the paintbrush tool 112, 112A.

The paintbrush tool 112, 112A may update one or more object attributes of the object token 110. In particular, a user may move the paintbrush tool 112, 112A to be disposed adjacent and/or come into contact with an object token 110. The automation controller 102 may determine the visualization tool 112 corresponds to a paintbrush tool 112, 112A that adjusts a color attribute for the object token 110. The automation controller 102 may retrieve and/or update the color attribute for the object token 110 and may control the projectors 122 to display the object visualizations 116 based on the adjusted color attribute. For example, a user may select the color attribute (e.g., via the GUI or an input on the paintbrush tool 112, 112A) to be applied by the paintbrush tool 112, 112A, or the paintbrush tool 112, 112A may be associated with the color attribute. Causing the paintbrush tool 112, 112A to be disposed adjacent and/or come into contact with an object token 110 may cause the projectors 122 to project an image having a color of the color attribute onto the object token 110, such that the object token 110 appears to be that color. In another example, the paintbrush tool 112, 112A may adjust a texture attribute, a material attribute, and any other suitable visual attribute of the object token 110. As such, the automation controller 102 may generate and/or adjust image content (e.g., the object visualizations 116) displayed by the projectors 122 based on tracker data, scanning data, and/or the interaction criteria.

With the foregoing in mind, FIG. 12B is a schematic diagram illustrating an example embodiment of the visualization tool 112 of the tangible/virtual design system 100 of FIG. 1 as a magnifying tool 112, 112B. As illustrated, the magnifying tool 112, 112B includes trackers 850, which includes three dots on a lateral edge of the magnifying tool 112, 112B. The automation controller 102 may determine a configuration of the trackers 850 on the visualization tool 112 and compare the configuration with stored tracker configurations in the memory 106 to identify the magnifying tool 112, 112B.

The magnifying tool 112B may adjust a point of view of the object token 110 and/or a portion of the tangible/virtual design system 100, such as the image content 204 viewed by the user via the projector 122 and/or the display 126. For example, the user may want a close-up or zoomed-in view of a 10 centimeter (cm) by 10 cm area on the display surface 108 and point the magnifying tool 112, 112B in the direction of the area and/or hover the magnifying tool 112, 112B over the area. The automation controller 102 may determine a location of the magnifying tool 112, 112B and may control the projectors 122 and/or the display 126 to display a close-up view of the 10 cm by 10 cm area. In another example, the user may want a bird's eye view (e.g., top perspective view) of the object token 110 and hover the magnifying tool 112, 112B over the object token 110. The automation controller 102 may identify the interaction between the magnifying tool 112, 112B and the object token 110 and may control the projectors 122 and/or the display 126 to display the bird's eye view of the object token 110. In certain instances, the user may move the magnifying tool 112, 112B for a side perspective view of the object token 110 and the automation controller 102 may control the projectors 122 to update the projections to the side perspective view and/or the display 126 to update the displayed image content 204 to the side perspective view. In this way, the user may adjust a position or orientation of the magnifying tool 112, 112B to adjust a perspective view of the object token 110 (e.g., as projected by the projectors 122 or display 126).

With the foregoing in mind, FIG. 12C is a schematic diagram illustrating an example embodiment of the visualization tool 112 of the tangible/virtual design system 100 of FIG. 1 as an angle-measuring tool 112, 112C. The angle-measuring tool 112, 112C may include machine-readable indicia 852 (e.g., barcode, QR code, RF tag) on an exposed surface. The image sensor 120 may generate image data including the machine-readable indicia 852 and the automation controller 102 may identify the corresponding visualization tool based on the image data.

The angle-measuring tool 112, 112C may measure angles within the tangible/virtual design system 100. As illustrated, the angle-measuring tool 112, 112C includes a first wing 854, 854A, a second wing 854, 854B, and a hinge 856 between the two wings 854. To extend a length of the first wing 854, 854A and the second wing 854B, one or more laser-emitting devices (e.g., laser pointers) may be integrated along one or more longitudinal edges of the wings 854. In this way, light 860 from the laser-emitting devices may emit from the first wing 854A and the second wing 854, 854B, respectively. To measure the angle (e.g., between object tokens 110, structures on the display surface 108 representing, for example, buildings, or other structures), the first wing 854, 854A may align with a first point (e.g., a first object token 110, 110A) and the second wing 854, 854B may align with a second point (e.g., a second object token 110, 110B). In certain instances, the light 860 may be emitted from the first wing 854, 854A, the second wing 854, 854B, or both and intersect with the object tokens 110. The image sensor 120 may capture image data of the angle-measuring tool 112, 112C, including the first wing 854, 854A, the second wing 854, 854B, and the hinge 856, as well as the first object token 110 and the second object token 110. The automation controller 102 may receive the image data and determine the angle 858 between the first wing 854, 854A and the second wing 854, 854B, thereby determining the angle between the first point and second point. By way of example, the angle-measuring tool 112, 112C may determine an angle between an object virtualization 116 and a wall of the tangible/virtual design system 100. The first wing 854, 854A may align with a corresponding object token 110 and the second wing 854, 854B may align with a second object token 110. The automation controller 102 may receive indication of this interaction and determine the angle 858 between the object virtualization 116 and the wall.

In another example, the angle-measuring tool 112, 112C may be used to detect angular motion of the object token 110 and/or corresponding object virtualization 116. In other examples, the angle-measuring tool 112, 112C may be used to determine a surface area of the object token 110. Still in another example, the angle-measuring tool 112, 112C may determine an amount and/or an angle of light within the tangible/virtual design system 100. For example, the angle-measuring tool 112, 112C may measure light from a first direction. Indeed, the first wing 854, 854A may point to a direction of incoming light and the second wing 854, 854B may point to a direction of reference or observation to measure ambient light in the direction of reference or observation within the tangible/virtual design system 100. Additionally or alternatively, the angle-measuring tool 112, 112C may measure light within the angle 858 between the first wing 854, 854A and the second wing 854, 854B.

With the foregoing in mind, FIG. 12D is a schematic diagram illustrating an example embodiment of the visualization tool 112 of the tangible/virtual design system 100 of FIG. 1 as a ruler tool 112, 112D. As illustrated, the ruler tool 112, 112D may include machine-readable indicia 852 (e.g., barcode, QR code, RF tag) on an exposed surface and the automation controller 102 may receive sensor data including the machine-readable indicia 852 to identify the ruler tool 112, 112D.

The ruler tool 112, 112D may measure physical attributes of object visualizations 116, object tokens 110, and/or other structures within the tangible/virtual design system 100. For example, the ruler tool 112, 112D may interact with the object token 110 to cause the automation controller 102 to determine a physical attribute of a corresponding object virtualization 116. In certain instances, a range of the ruler tool 112D may be extended for improved measurements. As such, a first end and a second end of the ruler tool 112, 112D may each include a laser-emitting device (e.g., a laser pointer) that generates (e.g., emits) a light 860 in a straight line. This may allow the range of the ruler tool 112, 112D to be extended beyond the length of the ruler tool 112, 112D.

The automation controller 102 to determine physical attributes of the object token 110. For example, the user may select a physical attribute (e.g., length, width, surface area) via the GUI and/or an input on the ruler tool 112, 112D to be determined. Interactions between the ruler tool 112, 112D and one or more object tokens 110 may cause the automation controller 102 to determine the physical attribute associated with the object visualization 116 corresponding to the object token 110 and control the projectors 122 to project the physical attribute. For example, the automation controller 102 may determine a length of an edge of the object visualization 116 in response to the ruler tool 112, 112D being placed adjacent to an edge of the object token 110. In another example, the automation controller 102 may determine a distance between two object visualizations 116. For example, the ruler tool 112, 112D may be disposed between two object tokens 110 to cause the automation controller 102 to determine a distance between two corresponding object visualizations 116. In certain instances, a length of the ruler tool 112, 112D may not extend from the first object token 110, 110A to the second object token 110. As such, the light 860 may be emitted from a first end, a second end, or both to extend the length of the ruler tool 112, 112D. The light 860 emitting from the first end may intersect with the first object token 110, 110B and the light 860 emitting from the second end may intersect with the second object token 110, 110B. In this way, the user may visually confirm that the measurement may be between the first object token 110, 110A and the second object token 110, 110B. Additionally or alternatively, the automation controller 102 may receive image data indicative of the first object token 110, 110A the second object token 110, 110B, and the light 860 and determine the measurement in response to receiving the image data. For example, the first object token 110, 110A may correspond to a building and the second object token 110, 110B may correspond to a ride attraction. As such, the measurement determined by the automation controller 102 may correspond to a distance between the building and the ride attraction. Additionally or alternatively, the ruler tool 112, 112D may be utilized to get dimensions of rooms (e.g., a length and a width) within the tangible/virtual design system 100.

The visualization tool 112 may include one or more of the embodiments described with respect to FIGS. 12A-12D but not limited to other tools, such as pens, pencils, input devices (e.g., mice, displays), AR/VR control devices, laser pointers, presentation clickers, and/or any combination of the above. Any of the tool, object token, sensors, or other part of this system may include a control which may make determinations and/or send instructions. These controllers may be communicatively coupled to the automation controller 102, receivers, transceivers, and/or transmitters in order to send and/or receive instructions. Any controller and/or combination of controllers from this disclosure may perform controller functions described in this disclosure.

With the foregoing in mind, FIG. 12E is a block diagram of an example embodiment of a visualization tool 112 of the tangible/virtual design system 100. The visualization tool 112 may include a first end 862 and a second end 864. The visualization tool 112 may also include identification information 866, such as images, text, colors, numbers, and/or patterns to provide identification information 866 to the user. For example, the identification information 866 may be used by the user to distinguish between each of the visualization tools 112 described above. Additionally or alternatively, the identification information 866 may be used by the system (e.g., automation controller 102) to identify the respective visualization tool 112. For example, the automation controller 102 may identify the visualization tool 112 based on the tracker 850. In another example, the automation controller 102 may identify the visualization tool 112 based on machine-readable indicia 852. The machine-readable indicia 852 may include QR codes, bar codes, RFID, light pulses, and the like. The automation controller 102 may identify the visualization tool 112 using sensors 853, such as RFID readers, QR readers, bar code readers, light detectors, cameras, etc. Additionally or alternatively, the visualization tool 112 may include sensor(s) 853, such as distance sensors (e.g., distance sensor that utilizes light (e.g., laser light) and/or sound), accelerometers, proximity sensors, LiDAR sensors, infrared sensors, ultraviolet sensors, and the like that may be used to identify the type of visualization tool 112, measure and/or track position and/or orientation of the visualization tool within the tangible/virtual design system 100 , and/or measure and/or identify parameters within tangible/virtual design system 100 (e.g., distance between two or more object tokens 110).

The visualization tool 112 may include input device(s) 868, such as buttons, touch screens, dials, touch pads, microphones, and the like. The visualization tool 112 may receive an input (e.g., from the user) and determine a type of visualization tool 112 and/or a parameter for measuring. For example, the user may select the type of visualization tool 112 using the input device(s) 868. In another example, gesture recognition may be used to adjust the parameters while the user is interacting with the visualization tool 112. For example, the automation controller 102 may receive sensor data from the image sensors 120 and identify a gesture (e.g., motion) of the user, such as the user's free hand while the user is interacting with the visualization tool 112. In some embodiments, the type of visualization tool 112 and/or the parameter for measuring may be set by default. The automation controller 102 may dynamically update the type of visualization tool 112 and/or a parameter being measured by the visualization tool 112. To this end, the visualization tool 112 may include output device(s) 870 such as light emitters (e.g., LEDs, lasers) and/or sound emitters. The visualization tool 112 may be dynamically updated from emitting light to emitting sound. Additionally or alternatively, the automation controller 102 may receive voice commands from the user. For example, the visualization tool 112 may generate audio recordings via the sensors 853, such as microphones, that may be partially integrated with and/or coupled to the visualization tool. In another example, the tangible/virtual design system 100 may include one or more voice input devices (e.g., microphones). As such, fewer steps may be performed by the user, which may improve efficiency of the tangible/virtual design system 100.

In an embodiment, the visualization tool 112 may include a brightness tool, a sound volume tool, a temperature tool, an odor tool, and/or other tool that measures a property of the object token 110 and a corresponding object visualization 116. In an instance, the brightness tool may interact with at least part of the object token 110 to cause the automation controller 102 to determine a brightness (e.g., luminance) level of the corresponding object virtualization 116. For example, a first end 862 of the brightness tool may interact with an object token 110, 110A and a corresponding brightness value may be measured and/or determined. In addition, the brightness tool may measure a change in brightness levels from a first end 862 of the visualization tool and a second end 864 of the visualization tool. For example, the brightness tool may measure and/or determine a difference in brightness levels between brightness associated with the first object token 110, 110A and brightness associated with the second object token 110, 110B. For example, the brightness tool may measure and/or determine the brightness associated with at least part of the first object token 110, 110A located at, near, or in front of the first end 862 of the brightness tool, the brightness tool may measure and/or determine the brightness associated with at least part of the second object token 110, 110B, and then the brightness tool and/or the automation controller 102 may determine a difference in brightness associated between at least part of the first object token 110, 110A and at least part of the second object token 110, 110B. Additionally or alternatively, the brightness tool may indicate to the automation controller 102 where (e.g., location relative to the location of the token indicated by the tool) to measure and/or determine the brightness levels associated with at least part (e.g., a portion, an end) of that token. The brightness tool may include a light emitting from the first end 862, the second end 864, or both to extend a range of the brightness tool. For example, light emitted from the first end may intersect with the first object token 110, 110A and light emitting from the second end 864 may intersect with the second object token 110, 110B. The brightness tool and/or the automation controller 102 may then determine and/or compare (e.g., determine difference between) an associated brightness with at least part of any object token 110 intersecting light emitted from either end of the brightness tool (e.g., at least part of the first object token 110, 110A intersecting light emitted from the first end 862 of the brightness tool and at least part of the second object token 110, 110B intersecting light emitted from the second end 864 of the brightness tool).

In another instance, the sound volume tool may interact with the object token 110 to cause the automation controller 102 to determine the sound volume at, near, and/or at least partially being output by a corresponding object virtualization 116 and/or a change in the sound volume between two corresponding object virtualizations 116. For example, the sound volume tool may measure and/or determine the sound volume levels associated with (e.g., occurring in the area of) and/or output at least partially by a first object token 110, 110A located at, near, or in front of the first end 862 of the sound volume tool. Additionally or alternatively, a second object token 110, 110B may be located at a second end 864 of the sound volume tool and the sound volume tool may determine a sound volume difference between the sound volume at, around, and/or output by the first object token 110, 110A and the second object token 110, 110B, or between the first end 862 and the second end 864 of the sound volume tool. Additionally or alternatively, the sound volume tool may indicate to the automation controller 102 where (e.g., location relative to the location of the token indicated by the tool) to measure and/or to determine the sound volume associated with at least part (e.g., a portion, an end) of that token. To extend a range of the sound volume tool, light may be emitted from the first end 862, the second end 864, or both. As such, the sound volume tool and/or the automation controller 102 may determine a sound volume associated with at least part of any object token 110 intersecting light emitted from either end of the sound volume tool (e.g., at least part of the first object token 110, 110A intersecting light emitted from the first end 862 of the brightness tool) and/or measure and/or derive a sound volume difference between at least part of any two object tokens 110 intersecting light emitted from either end of the sound volume tool (e.g., at least part of the first object token 110, 110A intersecting light emitted from the first end 862 of the brightness tool and at least part of the second object token 110,110B intersecting light emitted from the second end 864 of the brightness tool). The light may intersect with the object tokens 110 to provide a visual indication to the user of the measurement and/or determination being made.

Still in another instance, interactions between the temperature tool and an object token 110 may cause the automation controller 102 to determine a temperature of the corresponding object virtualization 116. For example, the temperature tool may measure and/or determine the temperature associated with at least part of the first object token 110, 110A located at, near, or in front of the first end 862 of the temperature tool. In addition, the temperature tool may measure a temperature difference associated with at least the first object token 110, 110A located at a first end 862 of the temperature tool and associated with at least part of the second object token 110, 110B located at, near, or in front of the second end of the temperature tool and/or the automation controller 102 may determine a difference in temperature between a temperature associated with at least part of the first object token 110, 110A and a temperature associated with at least part of the second object token 110, 110B. Additionally or alternatively, the temperature tool may indicate to the automation controller 102 where (e.g., location relative to the location of the token indicated by the tool) to measure and/or determine the temperature associated with at least part (e.g., a portion, an end) of that token. Additionally or alternatively, a range of the temperature tool may be extended by a light emitted from the first end, the second end, or both. For example, the temperature tool and/or the automation controller 102 may determine a temperature associated with at least part of any object token 110 intersecting light emitted from either end of the temperature tool and/or compare (e.g., determine difference between) two or more temperatures associated with at least part of any two object tokens 110 intersecting light emitted from either end of the temperature tool.

In another instance, the odor tool may measure an odor level (e.g., odor intensity) of the corresponding object virtualization 116. The odor tool may measure and/or determine the odor level associated with at least part of the first object token 110, 110A located at, near, or in front of the first end 862 of the odor tool. The odor tool and/or the automation controller 102 may determine a difference in odor levels associated with at least part of the first object token 110, 110A and at least part of the second object token 110, 110B located at, near, or in front of the second end of the odor tool. Additionally or alternatively, the odor tool may indicate to the automation controller 102 where (e.g., location relative to the location of the token indicated by the tool) to measure and/or determine the odor associated with at least part (e.g., a portion, an end) of that token. In certain instances, a length of the odor tool may be smaller than the distance between the first object token 110, 110A and the second object token 110, 110B. To this end, the range of the odor tool may be extended by a light emitting from the first end, the second end, or both. For example, the light emitting from the first end 862 may intersect with the first object token 110, 110A and/or the light emitting from the second end 864 may intersect with the second object token 110, 110B. The odor tool and/or the automation controller 102 may determine and/or compare an associated odor level with at least part of any object token 110 intersecting light emitted from either end of the odor tool. Additionally or alternatively, the odor tool may measure and/or determine an odor type (e.g., banana scent, rose scent, bread scent) associated with an object token 110. Certain features of certain visualization tools 112 may be combined with certain additional features of other visualization tools. For example, the range extension may be combined with the paintbrush tool 112, 112A such that light emitted from one end of the paintbrush tool may be pointed at an object token 110 to identify an object token for attribute (e.g., color, texture) changing instead of bringing the paintbrush tool 112, 112A close to or touching the object token 110. As such, the visualization tools 112 may provide a measurement and/or determination of physical attributes of the object token 110 and the corresponding object visualization. In this way, the tangible/virtual design system 100 may allow for efficient design and/or troubleshooting for amusement park attractions or experiences.

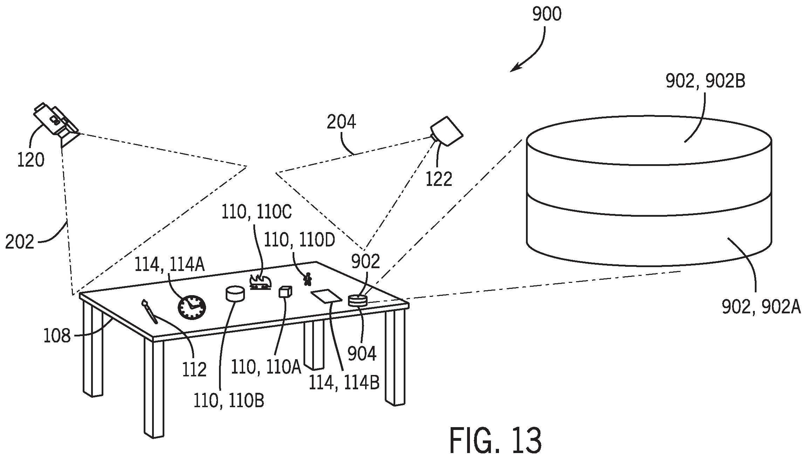

FIG. 13 is a perspective diagram that illustrates an example embodiment 900 of the tangible/virtual design system 100 in FIG. 1 including the display surface 108, the image sensor 120, and the projector 122, in accordance with an embodiment of the present disclosure. The example embodiment 900 of the tangible/virtual design system 100 is similar to the example embodiment 200 of the tangible/virtual design system 100 described with respect to FIG. 2, with the addition of filter tools 902 (e.g., visualization tools 112 described with respect to FIG. 12). The filter tools 902 may be utilized to provide a visual representation of one or more attributes of the object token 110. The filter tools 902 may include a cost filter, a brightness filter, a sound volume filter, a water usage filter, a viewing time filter, a sound level filter, a user input filter, and the like. The filter tool 902 may include markers and/or machine-readable indicia that may enable the automation controller 102 to detect the filter tool 902 based on image data captured by the image sensor 120. The automation controller 102 may detect the type of filter tool 902 based on the trackers and/or machine-readable indicia and update the object visualization 116 based on the type of filter tool 902. For example, the automation controller 102 may control the projectors 122 to generate an updated object visualization 116 for display. In this way, heuristic data of the object token 110 may be displayed by the projectors 122.

For example, the automation controller 102 may receive image data with a cost filter located on the display surface 108. The cost filter may be utilized to generate a cost associated with the object token 110 (e.g., portions of the object token 110). The automation controller 102 may retrieve a cost associated with the object token 110 from a data structure, such as a database, stored in the memory 106, and update the visualization of the object token 110 with the cost. For example, a color may be associated with each range of prices, such as red for a high price, yellow for medium price, and green for low price. In another example, a legend may be provided with a sliding scale for each price. In yet another example, the cost may be displayed in text next to the object token 110.

In another example, a brightness filter may be used to provide a visualization indicative of a surface brightness of the object token 110 and/or within a room. For example, the user may design a haunted house and may want to understand an amount of light hitting a scare mirror (e.g., a mirror that displays an illusion intended to scare a viewer). The automation controller 102 may generate combined imagery of both the object token 110 and an amount of light hitting surfaces of the scare mirror. In another example, a room may include one or more object tokens 110 representative of light sources and the brightness filter may be set to a threshold amount (e.g., due to a brightness constraint, building code, amusement park code, or the like). The automation controller 102 may generate a visualization of the room illustrating brightness above and/or below the threshold amount. For example, the visualization of the room may include portions with a brightness below the threshold that may be shaded by a first color or pattern and portions of the room with a brightness above the threshold may be shaded by a second color or pattern.

Additionally or alternatively, the user may adjust the object tokens 110 to adjust the brightness within the visualization. For example, the automation controller 102 may update the visualization and/or the brightness calculation in response to identifying movement of the object tokens 110. Indeed, the updated visualization of the room may include portions of the room with a brightness below the threshold shaded by a first color or pattern and portions of the room with a brightness above the threshold shaded by a second color or pattern. In certain instances, the adjustment may result in visualization of the room shaded by one color or pattern, which may indicate that the brightness is below the threshold or above the threshold.

Additionally or alternatively, a sound volume filter may be used to provide visualization indicative of sound levels on a surface of the object visualization 116 and/or within visualization of a room. The sound volume filter may be set to a threshold amount (e.g., sound volume constraint, building code constraint). The automation controller 102 may generate a visualization of a room with one or more object visualizations 116 (e.g., corresponding to one or more identified object tokens 110) and illustrate sound volumes being above or below the threshold level. For example, the object tokens 110 may correspond to speakers and/or any suitable sound system. Based on a configuration of the object tokens 110, the automation controller 102 may determine the sound volume outputted by each of the corresponding objects and generate visualization of the room. Indeed, the visualization of the room may include portions with sound volumes below the threshold that may be shaded by a first color or pattern and portions with volumes above the threshold that may be shaded by a second color or pattern.

Moreover, the automation controller 102 may provide suggest configurations of the object tokens 110 to meet a constraint. In certain instances, the filter tool 902 may receive input (e.g., via a GUI, via an input of the filter tool 902) of a constraint (e.g., brightness threshold, sound volume threshold, energy usage threshold). Returning to the brightness example, the user may use the GUI to set a brightness constraint of 30 lumens within the visualization of the room. The user may place two object tokens 110 corresponding to light sources on the display surface 108. The automation controller 102 may determine attributes (e.g., light output, position, orientation, configuration, location) of corresponding object virtualizations 116 of the object tokens 110 to determine levels of brightness in different areas of the room. In response to determining the brightness may be below the threshold, the automation controller 102 may adjust a position and/or an orientation one or more object visualizations 116 to adjust the brightness within the room to achieve the brightness of 30 lumens at the position and/or orientations.

In another example, the filter tool 902 may include a physical property filter. The physical property filter may provide geometric properties of an object visualization 116, such as a height, a length, a width, a surface area, a volume, and the like. For example, the object visualization 116 may represent a rock and the physical property filter may be used to provide physical attributes of the rock, such as a material of the rock, a size of the rock, a weight of the rock, and the like. In another example, the object visualization 116 may represent a waterfall attraction and the physical property filter may be used to determine areas of calcium deposits due to running water over a period of time. Still in another example, the object visualization 116 may represent a building and the physical property filter may be used to determine wind loads on different portions of the building. In certain instances, the physical property filter may simulate guest throughput for an attraction, such as for a store, a ride, a restaurant, and the like. For example, when designing the amusement park, the physical property filter may be used to map a movement of guests in a crowd flow simulation. The object tokens 110 may correspond to object visualizations 116, such as store, restaurant, ride, or sidewalk, and addition of the physical property filter may cause the automation controller 102 to generate visualizations of guest movements to and from the object visualizations 116. For example, automation controller 102 may generate visualizations of guests walking on sidewalks during peak crowd flow periods to get to or leave from a store. Based on the visualization, the user may determine if a size of the sidewalk is wide enough to accommodate the guests.

Still in another example, the filter tool 902 may include a user input tool that causes the automation controller 102 to generate image data with the object visualization 116 and a tag (e.g., badges, notification, text label, color). The tag may indicate a most recent user to edit the object visualization 116, a date or time of the editing, a number of times of editing, and other suitable editing attributes of a project. For example, the object visualization 116 may be an animated figure that multiple users may have worked on. A head of the animated figure may be edited three times by one user. As such, the object visualization 116 may include a tag on the head indicating a name of the user and the number of times edited. In this way, the object visualization 116 may be accompanied by editor annotations associated with the project for reference.

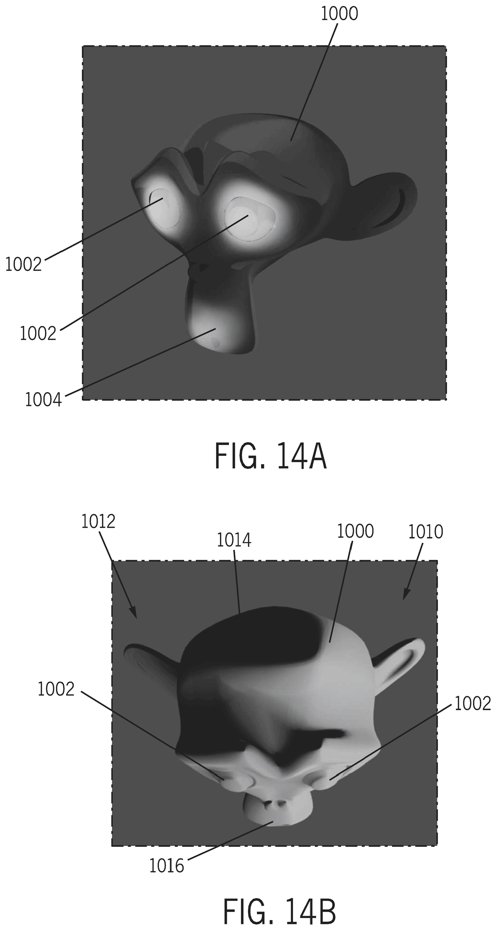

In another example, the filter tool 902 may include a viewing time filter. For example, certain portions of an object visualization 116 may be viewed more frequently by guests in comparison to other portions. For example, guests may only view a portion of an object, such as a figure, from a ride vehicle. The automation controller 102 may update the object visualization 116 to illustrate viewing time. As further described with respect to FIG. 14B, the object visualization 116 may be updated with a color gradient to illustrate the viewing time. For example, portions of the object visualization 116 may be shaded with a first color or pattern to illustrate high viewing time and other portions of the object visualization 116 may be shaded with a second color or pattern to illustrate low viewing time.

The filter tools 902 may be placed in a designated area 904 of the display surface 108. For example, the designated area 904 may be a corner of the display surface 108, however the designated area 904 may be any suitable area on the display surface 108. The image sensor 120 may generate image data including the filter tools 902 in the designated area 904 and the automation controller 102 may control the projectors 122 to update the object visualizations 116 based on the filter tools 902. In certain instances, two or more filter tools 902 may be utilized to display a relationship between properties of the filter tools 902. For example, a cost filter may be combined with or stacked on a viewing time filter, and the resulting projection mapping may indicate a relationship between the cost associated with building and/or maintaining the object virtualization 116 divided by viewing time by the guest. In another example, a brightness filter may be combined with or stacked on the cost filter and the resulting projection mapping may indicate a relationship between brightness within a room and the cost associated with generating the brightness. Additionally or alternatively, the object tokens 110 may be moved or shifted within the tangible/virtual design system 100 and the automation controller 102 may update the object visualization 116 in real time or near real time based on the filter tools 902 applied. For example, object tokens 110 may correspond to one or more light sources within an attraction. The automation controller 102 may determine an operation cost associated with each light source as well as the brightness (e.g., luminous flux, luminance) of each light source and control the projectors 122 to project the visualization. The user may adjust a configuration of the light sources (e.g., by moving one or more object tokens 110) and the automation controller 102 may update the visualization based on the adjusted configuration. For example, adjust the position of one light source may cause the overall brightness to change and/or an operation cost to change.

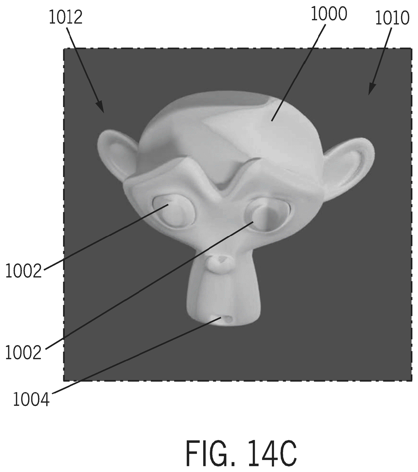

With the foregoing in mind, FIGS. 14A, 14B, and 14C illustrate embodiments of projection mapping by the tangible/virtual design system 100 of FIG. 1. For example, the user may place two object tokens 110 on the display surface 108 for projection mapping. The first object token 110 may correspond to an animated figure 1000 and the second object token 110 may correspond to a ride attraction. For example, the ride attraction may include tracks that pass by the animated figure 1000 and the guests may view certain portions the animated figure 1000 for a period of time. Moreover, the animated figure 1000 may include moveable components, which may be more expensive in comparison to non-moveable components. To determine such attributes, the user may place one or more filter tools 902 on the display surface 108 and the automation controller 102 may update and/or adjust the object visualization 116 based on the identified filter tools 902. For example, the automation controller 102 may control the projectors 122 to project a projection map of the animated figure 1000 based on the filter tool 902.

With the foregoing in mind, FIG. 14A is a cost projection map of an animated figure 1000 (e.g., associated with an object token 110 on the display surface 108). In particular, the display surface 108 may include one or more object tokens 110, including the object token 110 associated with the animated figure 1000 and an object token 110 representing a ride attraction, and the user may place one or more filter tools 902 (e.g., including a cost filter) on the display surface 108, causing the cost projection map of FIG. 14A to be projected. the animated figure 1000 may include a monkey with animated eyes 1002 and an animated mouth 1004. For example, both the animated eyes 1002 and the animated mouth 1004 may appear to blink, change colors, emit a sound, and/or emit a light. The remaining portions of the animated figure 1000, such as the head, the ears, the nose, and the like may remain still. As such, a cost associated with the animated eyes 1002 and the animated mouth 1004 may be higher in comparison to the still portions (e.g., head, ears, nose).

The projection mapping of the animated figure 1000 may illustrate a relative cost associated with each portion of the animated figure 1000. As illustrated, the animated eyes 1002 are white, the animated mouth 1004 is gray, and the remaining portions are dark gray or black. In certain instances, the darker colors may represent a low cost, while the lighter colors represent a high cost. For example, the projection mapping illustrates that the animated eyes 1002 may cost more than the animated mouth 1004 to make and/or maintain over time. Additionally, the projection mapping illustrates that the animated mouth 1004 may cost more than the remaining (e.g., still) portions of the animated figure 1000. As such, the user may visually understand a relative cost associated with each portion of the animated figure 1000. In certain instances, a legend may be displayed adjacent the projection mapping to provide a cost corresponding to each color. For example, the white color may correspond to five-thousand dollars while the black color may correspond to with five-hundred dollars. In other embodiments, the color scale may start at white for low cost and go to black for high cost, the color scale may include red, green, and blue, or the color scale may include any suitable colors selected by user input.

With the foregoing in mind, FIG. 14B is viewing time projection map of the animated figure 1000. For example, the user may want to understand how often each portion of the animated figure 1000 may be viewed by guests). In an instance, the first object token 110 may be adjacent to the second object token 110, which may correspond to the animated figure 1000 being adjacent the ride attraction. As such, a first lateral side 1010 of the animated figure 1000 may face the track of the ride attraction, which may be viewed by the guests may view the first lateral side 1010 more often (e.g., longer period of time) in comparison to a second lateral side 1012. Indeed, the second lateral side 1012 may face away from the track. To this end, the projection mapping of the animated figure 1000 may provide a visualization indicative of the amount of time each portion of the animated figure 1000 may be viewed by the guests during the ride attraction. For example, the first lateral side 1010 may be generally white or light gray to represent viewing by the guest over a longer period of time in comparison to the second lateral side 1012, which may be generally black or dark gray.

In certain instances, the ride attraction associated with the second object token 110 may wrap around a bottom portion of the animated figure 1000. As such, the projection mapping may illustrate a first longitudinal edge 1014 of the animated figure 1000 being generally black or dark gray, while a second longitudinal edge 1016 of the animated figure 000 may be generally white or light gray. In other words, the first longitudinal edge 1014 may be viewed for a period of time less than the second longitudinal edge 1016. In certain instances, the user may utilize the viewing time projection to determine the attributes each portion of the animated figure 1000. For example, the user may select relatively cheaper materials for the second lateral side 1012 and relatively more expensive materials for the first lateral side 1010, since guests may view the first lateral side 1010 for a longer period of time in comparison to the second lateral side 1012. In another example, the user may spend less time designing the second lateral side 1012 in comparison to the first lateral side 1010.

With the foregoing in mind, FIG. 14C is a cost per viewing time projection map of the animated figure 1000. In certain instances, the user may want to understand the relationship between two attributes of the object token 110. As such, the user may combine or stack multiple filter tools 902 to overlay multiple attributes on the object visualization 116. For example, a first filter tool 902, 902A may include a cost filter that may be combined or stacked on top of a second filter tool 902, 902B that may include a viewing time filter. The automation controller 102 may identify the combined or stacked configuration of the first filter tool 902, 902A and the second filter tool 902, 902B and determine a relationship. For example, the automation controller 102 may determine the relationship to be cost per viewing time associated with each portion of the animated figure 1000.

As illustrated in the projection mapping, the animated eyes 1002 of the animated figure 1000 may be lighter in color in comparison to the remaining (e.g., still) portions of the animated figure 1000, such as the head or the ears. As such, projection mapping may indicate that the cost per viewing time of the animated eyes 1002 may be higher in comparison to the still portions of the animated figure 1000. Additionally, the first lateral side 1010 of the animated figure 1000 may be lighter in color in comparison to the second lateral side 1012, which may indicate that the cost per viewing may be higher in comparison to the second lateral side 1012. Based on the visualization, the user may put more resources into the first lateral side 1010 in comparison to the second lateral side 1012 as the viewing time by guests may be higher.

In an embodiment, the automation controller 102 may generate projection map of brightness per cost in response to identifying the brightness filter combined or stacked on top of the cost filter. For example, the eyes 1002 of the animated figure 1000 may emit an amount of light which may be associated with a cost. In certain instances, each eye 1002 may emit light at different times and/or for different lengths. As such, the projection map may visualize differences between the two eyes 1002. Additionally, the user may be interested in the viewing time for each eye 1002. As such, the user may place the brightness filter, the cost filter, and the viewing time filter in a combined or stacked configuration on the display surface 108 to cause the automation controller 102 projection map the brightness per cost and viewing time of the animated figure 1000. In an embodiment, the eyes 1002 of the animated figure 1000 may emit a sound. The filter tools 902 may include a volume filter, a cost filter, and a viewing time filter in a combined or stacked configuration. As such, the automation controller 102 may determine volume per cost and viewing time for each portion of the animated figure 1000 and control the projectors 122 to project the sound volume per cost and viewing time projection map.

While only certain features of the invention have been illustrated and described herein, many modifications and changes will occur to those skilled in the art. It is, therefore, to be understood that the appended claims are intended to cover all such modifications and changes as fall within the true spirit of the invention.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for (perform)ing (a function)..." or "step for (perform)ing (a function)...", it is intended that such elements are to be interpreted under 35 U.S.C. 112(f). However, for any claims containing elements designated in any other manner, it is intended that such elements are not to be interpreted under 35 U.S.C. 112(f).

Further features and aspects of the disclosure may reside in the below clauses.

There is provided an amusement park attraction design system, comprising: a display surface having a first projection surface and a first tracker coupled to the first projection surface; an object token having a second projection surface and a second tracker coupled to the second projection surface; an image sensor configured to detect the first tracker and the second tracker, and generate location data based on the detected first tracker and the second tracker; a controller communicatively coupled to the image sensor, wherein the controller is configured to: receive the location data provided by the image sensor; identify the object token based on the second tracker; receive image content based on the identified object token; and send an indication of the image content to be projected onto the second projection surface based on the location data; and a projector communicatively coupled to the controller, wherein the projector is configured to: receive the indication of the image content from the controller; and project the image content onto the second projection surface.

The controller may be configured to determine a current position and a current orientation of the second projection surface based on the location data.

The controller may be configured to: identify the display surface based on the first tracker; receive second image content based on the identified display surface; and generate a second indication of the second image content to be projected onto the first projection surface based on the location data.

The projector may be configured to: receive the second indication of the second image content from the controller; and project the second image content onto the first projection surface.

The controller may be configured to determine a current position and a current orientation of the first projection surface of the display surface based on the location data.

The object token may be disposed on the display surface.

The object token may be disposed on the first projection surface.

The first tracker may be one of a first set of trackers and the second tracker may be one of a second set of trackers, each tracker of the first and second sets of trackers configured to emit an infrared signal.

The image sensor may comprise an infrared camera configured to detect the infrared signal.

There is also provided an image content display method, comprising: receiving, via processing circuitry, location data and configuration data associated with a first object token and a second object token located on a display surface; identifying, via the processing circuitry, the first object token and the second object token based on the configuration data; receiving, via the processing circuitry, image content based on the identified first object token; generating, via the processing circuitry, position data associated with the image content based on the location data; and generating, via the processing circuitry, an indication of the image content to be projected on the display surface based on the position data.

The method may comprise: receiving, via the processing circuitry, updated location data associated with the first object token, the second object token, or both; generating, via the processing circuitry, updated position data associated with the image content based on the updated location data; and generating, via the processing circuitry, a second indication of the image content to be projected on the display surface based on the updated position data.

The method may comprise: receiving, via the processing circuitry, updated location data associated with the first object token; generating, via the processing circuitry, second position data associated with the second object token based on the updated location data; and generating, via the processing circuitry, an instruction to actuate the second object token based on the second position data.

The method may comprise: receiving second location data and second configuration data associated with a third object token located on the display surface; identifying the third object token based on the second configuration data; receiving second image content based on the identified third object token; and generating a second indication of the second image content to be displayed on an electronic display based on the second location data.

The third object token may correspond to a camera object token.

The first object token may correspond to a projector object token and the second object token may correspond to a reflective material object token.

There is also provided an amusement park attraction design system, comprising: an object token having a projection surface and a set of trackers coupled to the projection surface; a display surface configured to receive the object token; an image sensor configured to detect the set of trackers and configured to generate location data and configuration data based on the set of trackers; and a controller communicatively coupled to the image sensor, wherein the controller is configured to: receive the location data and the configuration data from the image sensor; identify the object token based on the configuration data; receive image content based on the identified object token, wherein the image content corresponds to a feature of an amusement park attraction; and generate an indication of the image content to be projected onto the projection surface based on the location data.

The feature of the amusement park attraction may comprise at least one of a ride vehicle, a structure, scenery, a ride track, a guest, a path, or any combination thereof.

The amusement park attraction design system may comprise a visualization tool having a second set of trackers, wherein the image sensor may be configured to detect the second set of trackers and generate second location data based on the second set of trackers, and wherein the controller may be configured to: determine an interaction between the object token and the visualization tool based on the location data and the second location data; alter an attribute associated with the object token based on the interaction; and generate a second indication of second image content to be projected onto the projection surface based on the altered attribute.

The amusement park attraction design system may comprise an effect tile having a second set of trackers, wherein the image sensor may be configured to detect the second set of trackers and configured to generate second configuration data based on the second set of trackers, and wherein the controller may be configured to: receive the second configuration data from the image sensor; identify the effect tile based on the configuration data; receive second image content based on the effect tile; and generate a second indication of second image content to be projected onto the display surface.

The controller may be configured to generate a second indication of the image content to be displayed on an electronic display based on the location data.

## Claims

1. An amusement park attraction design system, comprising:
a display surface (108);
a first object token (110A) and a second object token (110B) located on the display surface (108); and
a controller (102) configured to:
receive location data and configuration data associated with the first object token (110A) and the second object token (110B);
identify the first object token (110A) and the second object token (110B) based on the configuration data;
receive image content (204) based on the identified first object token (110A), wherein the image content corresponds to a feature of an amusement park attraction;
generate position data associated with the image content (204) based on the location data; and
generate an indication of the image content to be projected on the display surface (108) based on the position data.

2. The amusement park attraction design system of Claim 1, wherein the controller is further configured to generate an instruction to actuate the first object token (110A), or the second object token (110B), or both, based on the position data.

3. The amusement park attraction design system of Claim 2, wherein the instruction to actuate is further based on a stored design.

4. The amusement park attraction design system of Claim 1, wherein the controller is further configured to:
update location data associated with the first object token (110A);
generate second position data associated with the second object token (110B) based on the updated location data; and
generate an instruction to actuate the second object token (110B) based on the second position.

5. The amusement park attraction design system of Claim 1, wherein the controller is further configured to:
receive updated location data associated with the first object token (110A), the second object token (110B), or both;
generate updated position data associated with the image content (204) based on the updated location data; and
generate a second indication of the image content (204) to be projected on the display surface (108) based on the updated position data;

6. The amusement park attraction design system of Claim 1, wherein the first object token (110A) corresponds to a projector object token and the second object token (110B) corresponds to a reflective material object token.

7. An image content display method, comprising:
receiving, via processing circuitry, location data and configuration data associated with a first object token (110A) and a second object token (110B) located on a display surface (108), wherein the first object token (110A) or the second object token (110B) correspond to components of an amusement park attraction;
identifying, via the processing circuitry, the first object token (110A) and the second object token (110B) based on the configuration data;
receiving, via the processing circuitry, image content (204) based on the identified first object token (110A);
generating, via the processing circuitry, position data associated with the image content (204) based on the location data; and
generating, via the processing circuitry, an indication of the image content (204) to be projected on the display surface (108) based on the position data.

8. The method of Claim 7, further comprising generating, via the processing circuitry, an instruction to actuate the first object token (110A), or the second object token (110B), or both, based on the position data.

9. The method of Claim 8, wherein the instruction to actuate is further based on a stored design.

10. The method of Claim 8, wherein the instruction to actuate comprises moving the first object token (110A), or the second object token (110B), or both to a desired position and/or orienting the first object token (110A), or the second object token (110B), or both based on the stored design.

11. The method of Claim 7, further comprising:
receiving, via the processing circuitry, updated location data associated with the first object token (110A), the second object token (110B), or both;
generating, via the processing circuitry, updated position data associated with the image content (204) based on the updated location data; and
generating, via the processing circuitry, a second indication of the image content (204) to be projected on the display surface (108) based on the updated position data.

12. The method of Claim 7, further comprising:
receiving, via the processing circuitry, updated location data associated with the first object token (110A);
generating, via the processing circuitry, second position data associated with the second object token (110B) based on the updated location data; and
generating, via the processing circuitry, an instruction to actuate the second object token (110B) based on the second position data.

13. The method of Claim 7, further comprising:
receiving second location data and second configuration data associated with a third object token (110C) located on the display surface (108);
identifying the third object token (110C) based on the second configuration data;
receiving second image content based on the identified third object token (110C);
and
generating a second indication of the second image content to be displayed on an electronic display based on the second location data.

14. The method of Claim 13, wherein the third object token (110C) corresponds to a camera object token.

15. The method of Claim 7, wherein the first object token (110A) corresponds to a projector object token and the second object token (110B) corresponds to a reflective material object token.
